(19) Europäisches Patentamt
European Patent Office
Office européen des brevets

(11) **EP 3 250 885 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **16702683.0**

(22) Anmeldetag: **28.01.2016**

(51) Int Cl.:
**G01M 13/04** *(2019.01)*     **G01M 3/04** *(2006.01)*
**G01B 21/04** *(2006.01)*

(86) Internationale Anmeldenummer:
**PCT/EP2016/051742**

(87) Internationale Veröffentlichungsnummer:
**WO 2016/120356 (04.08.2016 Gazette 2016/31)**

(54) **VERFAHREN ZUR ERMITTLUNG EINES AUF EINE DREHVORRICHTUNG EINWIRKENDEN MOMENTS ODER EINER AUF EINE DREHVORRICHTUNG EINWIRKENDEN KRAFT**

METHOD FOR DETERMINING A TORQUE ACTING ON A ROTATIONAL DEVICE OR A FORCE ACTING ON A ROTATIONAL DEVICE

DISPOSITIF PERMETTANT DE DÉTERMINER UN COUPLE AGISSANT SUR UN DISPOSITIF ROTATIF OU UNE FORCE AGISSANT SUR UN DISPOSITIF ROTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2015   DE 102015201583**

(43) Veröffentlichungstag der Anmeldung:
**06.12.2017   Patentblatt 2017/49**

(73) Patentinhaber: **Carl Zeiss Industrielle Messtechnik GmbH**
**73447 Oberkochen (DE)**

(72) Erfinder:
• **SAGEMÜLLER, Rainer**
  **73434 Aalen (DE)**
• **SEITZ, Dominik**
  **73525 Schwäbisch Gmünd (DE)**

(74) Vertreter: **Patentanwälte Bressel und Partner mbB**
**Potsdamer Platz 10**
**10785 Berlin (DE)**

(56) Entgegenhaltungen:
**EP-A1- 2 171 394       WO-A1-2013/007285**
**WO-A1-2013/007286**

**Beschreibung**

Die vorliegende Erfindung betrifft ein Verfahren zur Ermittlung eines Moments und/oder einer Kraft, das/die auf eine Drehvorrichtung eines Koordinatenmessgeräts (KMG) einwirkt und das/die quer zu einer Drehachse eines Rotors der Drehvorrichtung ist, und ein Verfahren zur Ermittlung eines Phasenwinkels des Schwerpunkts einer Masse auf einem Rotor einer Drehvorrichtung.

Drehachsen, insbesondere hochgenaue, luftgelagerte Drehtische, sind häufig empfindlich gegenüber Beladungen bzw. Belastungen mit Kippmoment. Die Überlastung eines Luftlagers kann dazu führen, dass der Luftspalt zusammenbricht und sich die beiden gegenüberliegenden Lagerflächen berühren. In diesem Fall darf die Drehachse nicht weiter bewegt werden, da sonst Schäden am Luftlager entstehen können bzw. das Lager festfrisst.

Auch wälzgelagerte Drehachsen dürfen nicht überladen werden. Wälzlagerungen neigen zwar weniger zum Festfressen, dennoch sind die Wälzlagerungen für genaue Drehachsen in der Regel hochgenau gefertigt. Überlastungen führen bei Wälzlagerungen zu plastischen Verformungen/Verschleiß, z.B. der Wälzkörper, wodurch die Genauigkeit anschließend nicht mehr gegeben ist. Insbesondere bei zeitlich länger vorliegender Überlastung kann eine wälzgelagerte Drehachse Schaden nehmen.

Spindelprüfungen von wälzgelagerten Drehtischen zeigen, dass diese im Auslieferungszustand oft eine hervorragende Genauigkeit aufweisen, nach einigen Betriebsjahren jedoch deutliche Bewegungsfehler zeigen. Die Verschlechterung der Drehachse erfolgt dabei häufig unbemerkt, wodurch unzuverlässige Messergebnisse entstehen.

Das Problem betrifft z.B. auch Dreh-Schwenk-Gelenke, bei denen Kippmomente bzw. Momente senkrecht zur Drehachse, beispielsweise durch deren Einbaulage oder die eingesetzten Sensoren und Tastersysteme, entstehen. Die Lagerungen von Dreh-Schwenk-Gelenken in der Messtechnik sind dabei häufig aus Gewichts- oder Platzgründen eher schwach ausgelegt.

Muss eine Drehvorrichtung beim Kunden getauscht werden, z.B. weil das Koordinatenmessgerät (KMG) die Annahmeprüfung nicht mehr besteht, bleibt die Ursache des Verschleiß häufig unklar bzw. kann eine Überlastung der Drehachse durch den Kunden meist nicht nachgewiesen werden.

Einige Drehtische, wie z.B. der RT-AB von Zeiss, haben eine aufwendige und teure Lagerüberwachung, die zunächst nur für luftgelagerte Drehachsen einsetzbar ist.

Kippmomente verursachen bei Drehachsen neben Abweichungen von der idealen Drehbewegung (Bewegungsfehler) in der Regel auch Fehler auf dem Drehwinkelmesssystem. Um wenigstens das Winkelmesssystem weitgehend unabhängig von den Einflüssen des Kippmoments zu machen, kommen häufig teure, eigengelagerte Winkelmesssysteme zum Einsatz. Derartige eigengelagerte Winkelmesssysteme sind dann häufig reibungsbehaftet, wodurch Hysteresen entstehen können.

Das Dokument WO2013/007285 beschreibt eine bekannte Anordnung zur Messung von Koordinaten eines Werkstücks und/oder zum Bearbeiten des Werkstücks. Eine Aufgabe der Erfindung besteht darin, eines oder mehrere der oben genannten Probleme zu lösen. Insbesondere sollte ein Verfahren zur Ermittlung eines auf eine Drehvorrichtung einwirkenden Moments oder einer auf eine Drehvorrichtung einwirkenden Kraft angegeben werden. Mit Hilfe des Verfahrens sollte es möglich sein, eine Überlastung der Drehvorrichtung, insbesondere eines Lagers der Drehvorrichtung, festzustellen.

Nach einer grundlegenden Idee der Erfindung wird ein Moment, das quer zu einer Drehachse der Drehvorrichtung ist, durch Auswertung einer Auslenkung des Rotors, und alternativ oder zusätzlich durch Auswertung eines Positionsfehlers des Rotors, ermittelt. Es wird dann in der Erfindung der Wert des Moments ermittelt. Es wird in der Erfindung ein Zusammenhang zwischen dem Moment einerseits und der Auslenkung und/oder dem Positionsfehler andererseits verwendet. Der Zusammenhang kann ermittelt werden oder für eine Drehvorrichtung bekannt sein. Mit Hilfe des Zusammenhangs kann aus einer festgestellten Auslenkung und/oder einem festgestellten Positionsfehler des Rotors das Moment ermittelt werden.

Der besondere Vorteil der Erfindung liegt darin, dass in nur einer Drehposition der Drehvorrichtung bzw. eines Rotors der Drehvorrichtung das Moment ermittelbar ist. Es ist somit keine Drehung von beweglichen Teilen der Drehvorrichtung, insbesondere eines Rotors, erforderlich. Das Verfahren kann ohne Drehbewegung stattfinden.

Bei der Verwendung zumindest drei Detektionseinrichtungen kann eine Auslenkung, und daraus in einem nächsten Schritt das Kippmoment und/oder Positionsfehler, in jeder Rotorstellung bzw. Drehposition, und bei nur genau einer solchen Drehstellung oderposition bestimmt werden. Durch das Vermeiden einer Drehung können Beschädigungen einer Drehvorrichtung, insbesondere eines Drehlagers, vermieden werden, wenn ein Moment aufgebracht wird, das eine Überlastung von Teilen der Drehvorrichtung zur Folge hätte. Dies ist besonders vorteilhaft bei empfindlicher Lagerung des Rotors, zum Beispiel bei Luftlagerung. Luftlager können sehr schnell beschädigt werden, wenn sie durch ein übermäßiges Kippmoment auf die gelagerte Rotorachse überlastet werden. Es kann die Auslenkung und daraus ein Kippmoment und/oder Positionsfehler, in einer Drehposition ermittelt werden, ohne dass eine Drehbewegung oder eine Einstellung einer oder mehrerer weiterer Drehpositionen erforderlich ist, wobei ein empfindliches Lager beschädigt werden könnte.

Die Begriffe "Moment" und "Drehmoment" werden synonym verwendet. Ein Moment bzw. Drehmoment, das quer, insbesondere senkrecht zu einer Drehachse einer Drehvorrichtung ist wird auch als "Kippmoment" bezeichnet. Der Begriff "Kippmoment" ist daher hergeleitet, dass eine geeignete, extern auf die Drehachse wirkende Kraft, die ein Moment quer zur Drehachse bewirkt, eine mehr oder weniger große Auslenkung des Rotors in Form einer Verkippung bewirkt. Die Kraft ist beispielsweise die Gewichtskraft eines Werkstücks, das mit seinem Masseschwerpunkt abseits der Drehachse eines Rotors positioniert ist, wodurch der Rotor durch die Gewichtskraft quer zur Drehachse, anders ausgedrückt seitlich, ausgelenkt, insbesondere verkippt wird. Kippmomente können auch durch Zentrifugalkräfte entstehen, bei Drehung eines Rotors einer Drehvorrichtung.

Eine "Auslenkung" des Rotors bedeutet, dass der Rotor um eine Rotationsachse rotiert wird, die die quer zur Drehachse des Rotors ist. Anders ausgedrückt ist die Auslenkung eine rotatorische Bewegung des Rotors um eine Rotationsachse die quer zur vorgesehenen Drehachse des Rotors steht (auch bezeichnet als Verkippung oder rotatorische Auslenkung). Die quer zur Drehachse des Rotors stehende Rotationsachse ist vorzugsweise eine virtuelle Achse, also keine baulich ausgeführte Drehachse.

Das Moment kann ausgedrückt werden durch das Kreuzprodukt

$$M = r \times F$$

Wobei F beispielsweise die von einer Masse, die auf der Drehvorrichtung positioniert ist, erzeugte Gewichtskraft ist, welche parallel zu der Drehachse gerichtet ist, oder eine parallel zu der Drehachse stehende Kraftkomponente ist, und r beispielsweise der radiale Abstand des Schwerpunkts der Masse von der Drehachse ist.

Das Moment wirkt auf die Drehachse ein und/oder auf ein um die Drehachse drehbares Teil der Drehvorrichtung, insbesondere einen Rotor und/oder einen Messkörper oder Detektionseinrichtungen eines Messsystems.

Der genannte Zusammenhang zwischen i) Moment und ii) Auslenkung und/oder Positionsfehler ist insbesondere eine (Werte)zuordnung oder ein funktionaler Zusammenhang, die in dieser Beschreibung noch erläutert werden. Weitere Werte können bei einer Zuordnung hinzutreten, wie beispielsweise Drehposition des Rotors, Phasenwinkel des Schwerpunkts der Masse, auf der Drehvorrichtung, beispielsweise im Gerätekoordinatensystem der Drehvorrichtung, Phasenwinkel einer Masse, insbesondere des Schwerpunkts, relativ zu einer Detektionseinrichtung eines Messsystems.

Es kann ein funktionaler Zusammenhang erhalten werden, wobei eine Auslenkung des Rotors und/oder ein Positionsfehler der Drehvorrichtung als Funktion des erzeugten Moments ausgedrückt ist/sind, oder umgekehrt. Weitere Variable können hinzutreten, wie beispielsweise Drehposition eines Rotors, Phasenwinkel des Schwerpunkts der Masse, auf der Drehvorrichtung, zum Beispiel im Gerätekoordinatensystem der Drehvorrichtung, Phasenwinkel des Schwerpunkts einer Masse relativ zu einer Detektionseinrichtung eines Messsystems. Es kann somit die Auslenkung und/oder der Positionsfehler als Funktion des Moments, einer Drehposition und ggf. noch weiterer Variablen erhalten werden.

Nach einer weiteren grundlegenden Idee der Erfindung wird eine Kraft, die quer zu einer Drehachse der Drehvorrichtung ist, durch Auswertung einer Auslenkung des Rotors, und alternativ oder zusätzlich durch Auswertung eines Positionsfehlers des Rotors, ermittelt. Es wird dann der Wert der Kraft ermittelt. Es wird in der Erfindung ein Zusammenhang zwischen der Kraft einerseits und der Auslenkung und/oder dem Positionsfehler andererseits hergestellt. Der Zusammenhang kann ermittelt werden oder für eine Drehvorrichtung bekannt sein. Mit Hilfe des Zusammenhangs kann aus einer festgestellten Auslenkung und/oder einem festgestellten Positionsfehler des Rotors das Moment ermittelt werden. Auch dieser Zusammenhang kann in Form einer Zuordnung oder in Form eines funktionalen Zusammenhangs vorliegen oder ermittelt werden.

Eine Kraft quer zur Drehachse des Rotors wird in dieser Erfindung auch als Querkraft oder in dem entsprechenden Zusammenhang kurz nur als "Kraft" bezeichnet. Die Querkraft wirkt auf die Drehachse ein und/oder auf ein um die Drehachse drehbares Teil der Drehvorrichtung, insbesondere einen Rotor, Detektionseinrichtungen und/oder einen Messkörper, insbesondere, eine Maßverkörperung eines Drehpositionsmesssystems. Die Querkraft bewirkt, wie das Kippmoment, eine Auslenkung eines Rotors der Drehvorrichtung quer zur Drehachse des Rotors.

Wenn in dieser Beschreibung ein Zusammenhang, eine Zuordnung, ein funktionaler Zusammenhang, ein Verfahren oder Vorrichtungen mit Bezug auf ein Moment beschrieben sind, das quer zu einer Drehachse ist, kann sich die Offenbarung alternativ oder zusätzlich zum Moment auf die Querkraft beziehen. Die Querkraft kann zum Beispiel eine Translation beweglicher Teile eines Messsystems, beispielsweise eines Messkörpers oder einer Detektionseinrichtung, die die relative Lage oder Lageänderung des Messkörpers detektiert, bewirken. Eine Querkraft kann zum Beispiel auftreten, wenn eine Drehachse gewollt oder ungewollt schräg eingebaut wird, beispielsweise ein schräg eingebauter Drehtisch oder ein Drehgelenk. Eine Querkraft kann auf die Drehvorrichtung ausgeübt werden, beispielsweise mit einem Taster eines Koordinatenmessgeräts.

In der Erfindung wird die Auslenkung anhand einer Relativposition oder Relativbewegung von Teilen eines Messsystems ermittelt. Das Messsystem ist insbesondere ein Drehpositionsmesssystem oder ein Winkelmesssystem.

Es wird eine Relativposition oder Relativbewegung, die insbesondere auf einen Ausgangszustand ohne aufgebrachtes Kippmoment oder ohne aufgebrachte Querkraft bezogen ist, betrachtet, wobei die Relativposition oder Relativbewegung nicht durch eine Drehbewegung des Rotors verursacht ist, sondern durch eine Auslenkung des Rotors. Die Relativposition oder Relativbewegung ist anders ausgedrückt eine relative Position oder eine Änderung der relativen Position (z.B. im Vergleich zu einem Referenzpunkt) eines Messkörpers einerseits und Detektionseinrichtungen. In einem erwähnten Ausgangszustand ohne aufgebrachtes Kippmoment oder ohne aufgebrachte Querkraft können an anderer Stelle dieser Beschreibung erwähnte Referenzpunkte für Detektionseinrichtungen bestimmt werden.

Die Relativposition oder Relativbewegung ist insbesondere eine relative Position oder eine Änderung der relativen Position (z.B. im Vergleich zu einem Referenzpunkt) von Teilen oder Komponenten des Messsystems. Die betrachteten Teile sind insbesondere ein Messkörper und Detektionseinrichtungen, die unten beschrieben sind.

Nach noch einer Idee der Erfindung wird eine Verkippung (Schiefstellung des Rotors), insbesondere ein Kippwinkel des Rotors, durch Auswertung einer Auslenkung, d.h. der Relativposition oder Relativbewegung von Teilen eines Messsystems, ermittelt. Alternativ oder zusätzlich kann die Verkippung (Schiefstellung des Rotors), insbesondere ein Kippwinkel des Rotors, durch Auswertung eines Positionsfehlers des Rotors, ermittelt werden. Beispielsweise kann ein Zusammenhang zwischen einem Kippwinkel und einer Auslenkung des Rotors oder ein Zusammenhang zwischen einem Kippwinkel und einem Positionsfehler des Rotors ermittelt werden oder bekannt sein und mit Hilfe des Zusammenhangs kann ein unbekannter Kippwinkel anhand einer ermittelten Auslenkung oder eines ermittelten Positionsfehlers bestimmt werden.

Angegeben wird von der Erfindung ein Verfahren zur Ermittlung eines Moments und/oder einer Kraft, das/die auf eine Drehvorrichtung eines Koordinatenmessgeräts einwirkt und das/die quer zu einer Drehachse eines Rotors der Drehvorrichtung ist, wobei die Drehvorrichtung ein Messsystem aufweist, welches aufweist:

- einen Messkörper
- zumindest drei Detektionseinrichtungen zur Detektion einer relativen Position der Detektionseinrichtungen zu dem Messkörper und/oder zur Detektion einer Änderung der relativen Position der Detektionseinrichtungen zu dem Messkörper,

und wobei das Verfahren die folgenden Schritte aufweist

- Erzeugen eines Moments und/oder einer Kraft, das/die auf die Drehvorrichtung einwirkt und das/die quer zu der Drehachse des Rotors der Drehvorrichtung ist, wobei das Moment und/oder die Kraft eine Auslenkung des Rotors bewirkt,
- Ermitteln der Auslenkung des Rotors und/oder eines Positionsfehlers des Rotors in einer eingestellten Drehposition des Rotors, aus der relativen Position der zumindest drei Detektionseinrichtungen zu dem Messkörper,
- Ermitteln eines Wertes des Moments und/oder der Kraft bei der einen eingestellten Drehposition des Rotors, unter Verwendung eines für die Drehvorrichtung bekannten oder ermittelten Zusammenhangs, der eine Zuordnung oder ein funktionaler Zusammenhang ist zwischen

    i) Moment und/oder Kraft, und
    ii) Auslenkung und/oder Positionsfehler.

Das Verfahren, insbesondere das Erzeugen des Moments und/oder der Kraft, kann im Betrieb der Drehvorrichtung im nicht drehenden Zustand des Rotors durchgeführt werden, beispielsweise wenn ein Werkstück auf der Drehvorrichtung positioniert ist. Der Betrieb der Drehvorrichtung meint die generelle Benutzung der Drehvorrichtung, beispielsweise zu Messzwecken. Die Drehvorrichtung kann in oder an einem Koordinatenmessgerät (KMG) oder einer Werkzeugmaschine angeordnet sein. Das Verfahren, insbesondere das Erzeugen des Moments und/oder der Kraft, kann im Betrieb, insbesondere im Messbetrieb des KMG oder der Werkzeugmaschine durchgeführt werden. Das ermittelte Moment kann in Prüfprozessen, Verfahrprozessen und/oder Korrekturprozessen des Koordinatenmessgerätes berücksichtigt werden.

Das Verfahren kann den Schritt des Bestimmens eines Referenzpunkts für die Detektionseinrichtungen aufweisen. Der Referenzpunkt ist ein Messwert ohne erzeugtes Moment, das auf die Drehvorrichtung einwirkt und ohne Erzeugen einer Kraft, die auf die Drehvorrichtung einwirkt und das/die quer zu der Drehachse des Rotors der Drehvorrichtung ist. Es wird also zur Ermittlung eines Referenzpunktes einer Detektionseinrichtung ein Messwert ermittelt, ohne dass ein genanntes Moment oder eine genannte Kraft erzeugt wird. Ein Messwert, der unter Einwirkung eines Momentes und/oder einer Querkraft erhalten wird, kann auf den Referenzpunkt in Relation gesetzt. Die Ermittlung eines Referenzpunktes für eine Detektionseinrichtung ist aber nicht erforderlich, wenn eine absolut messende Detektionseinrichtung verwendet wird. Absolute Detektionseinrichtungen können leicht ausgewertet werden (z.B. Anschluß über Bus-Systeme ohne weitere Hardware) wodurch die Attraktivität des Verfahrens steigt.

Die Drehvorrichtung ist an sich nicht beschränkt auf eine bestimmte Drehvorrichtung. Die Drehvorrichtung ist zum Einsatz in einem Koordinatenmessgerät (KMG) geeignet oder ausgestaltet, oder die Drehvorrichtung ist die Drehvorrichtung in einem KMG. Die Erfindung ist bei Drehvorrichtungen anwendbar, die um beliebige Winkel und/oder beliebig oft in einer oder mehreren Drehrichtungen drehbar sind. Die Erfindung ist ebenfalls anwendbar bei Drehvorrichtungen, deren Drehbewegung beschränkt ist, bei denen beispielsweise eine Drehung nur um einen bestimmten Winkel oder in einem begrenzten Winkelbereich möglich ist.

Beispiele für Drehvorrichtungen sind Drehgelenkte, Drehvorrichtungen mit mehreren Drehachsen, Drehschwenk-Gelenke, die mehrere Drehachsen aufweisen, Drehtische und Dreh-Schwenktische. Bevorzugt ist in der vorliegenden Erfindung ein Drehtisch oder Dreh-Schwenktisch. Dreh-Schwenk-Tische mit zwei Drehachsen haben oft eine unsymmetrische Struktur. Eine um eine zweite Achse drehbare Masse kann ein Kippmoment an der ersten Drehachse einleiten und dadurch eine Auslenkung oder einen Positionsfehler der ersten Achse erzeugen, auch ohne Beladung des Dreh-Schwenk-Tisches mit einem Werkstück. Weiterhin können Gewichtskräfte durch die Schiefstellung der Achsen, bei den mehreren Drehachsen, zu Auslenkung oder Positionsfehlern führen. In einer Ausführungsform der Erfindung ist die Drehvorrichtung eine Drehvorrichtung für ein Koordinatenmessgerät, die insbesondere ausgewählt ist aus den zuvor genannten Drehvorrichtungen. In einem anderen Aspekt betrifft die Erfindung Drehvorrichtungen, die in Werkzeugmaschinen, Robotern und anderen Anwendungen einsetzbar sind, bei denen es auf hohe Genauigkeit ankommt.

Eine Drehvorrichtung weist vorzugsweise einen Rotor und einen Stator auf. Der Stator ist ein fest stehender Teil der Drehvorrichtung. Der Rotor ist ein rotierender Teil der Drehvorrichtung.

Die Drehvorrichtung kann ein Drehgelenk und/oder ein Drehlager aufweisen. Ein Rotor und Stator können über das Drehgelenk oder ein Drehlager miteinander gekoppelt sein. Ein Drehlager kann beispielsweise ein Luftlager oder ein Wälzlager sein. Ein Drehgelenk ist nicht beschränkt auf ein bestimmtes Drehgelenk. Ein Drehgelenk kann einteilig oder mehrteilig ausgebildet sein. Ein einteiliges Drehgelenk wird auch als monolithisches Drehgelenk bezeichnet. Ein einteiliges Gelenk weist zwei Bereiche auf, die relativ zueinander um eine Drehachse drehbar und optional auch gegeneinander translatierbar sind. Ein einteiliges Drehgelenk kann zudem einteilig mit den beiden zu verbindenden Elementen ausgebildet sein. Ein mehrteiliges Gelenk weist mindestens zwei Teile oder Elemente auf, die relativ zueinander um eine Drehachse drehbar sind.

Das Messsystem ist in einer Variante der Erfindung ein Drehpositionsmesssystem. In diesem Fall ist der Messkörper eine Maßverkörperung zur Bestimmung einer Drehposition oder Drehpositionsänderung, insbesondere eines Winkelposition oder Winkelpositionsänderung. Eine Maßverkörperung wird alternativ auch als "Referenzkörper" bezeichnet. Im Fall eines Drehpositionsmesssystems ist mit den Detektionseinrichtungen eine Drehposition oder Drehpositionsänderung, insbesondere eine Winkelposition oder Winkelpositionsänderung detektierbar.

Mit der Erfindung ist ein Drehpositionsfehler bestimmbar, wenn die Drehvorrichtung als Messsystem ein Drehpositionsmesssystem aufweist, das zumindest drei Detektionseinrichtungen zur Ermittlung der Drehposition aufweist. Der Drehpositionsfehler ist insbesondere der Fehler eines Drehpositionsmesssystems.

Die Detektionseinrichtung wird auch als Sensor bezeichnet. Im Fall eines Drehpositionsmesssystems kann der Sensor ein Abtastkopf oder ein Lesekopf sein, womit eine Position oder Bewegung einer Maßverkörperung detektiert werden kann. Die Maßverkörperung kann detektierbare Markierungen aufweisen. Die Detektionseinrichtung kann zum Beispiel Markierungen an der Maßverkörperung erfassen, die sich bei einer Drehbewegung der Drehvorrichtung durch den erfassbaren Bereich der Detektionseinrichtung hindurchbewegen. Dabei können die Markierungen z.B. strichförmige Markierungen sein, die sich in Bezug auf die Drehachse in radialer Richtung erstrecken oder die sich parallel zur Drehachse erstrecken. Entsprechende Maßverkörperungen werden auch als Teilkreisscheiben bezeichnet. Derartige Markierungen werden mit der Detektionseinrichtung, beispielsweise mit einem optischen Sensor erfasst. Möglich sind in einer anderen Variante magnetische Markierungen, etwa durch eine Anordnung mit um die Drehachse herum verteilten magnetischen Elementen. Die entsprechend Detektionseinrichtung zur Erfassung der magnetischen Markierungen kann z.B. ein magnetoresistiver Sensor sein. Idealerweise befindet sich eine Vielzahl der Markierungen um die Drehachse herum verteilt in gleichen Winkelabständen zueinander. Bei einer Relativbewegung von Detektionseinrichtung und Maßverkörperung kann von der Detektionseinrichtung ein Zählerstand vorbeilaufender Markierungen oder ein Signal für jede vorbeilaufende Markierung erfasst werden.

Das Messsystem ist in einer anderen Variante ein Lagemesssystem, bei dem eine relative Lage oder eine Lageänderung von den Detektionseinrichtungen relativ zu dem Messkörper ermittelt wird. Durch die Lage oder Lageänderung kann eine Auslenkung ermittelt werden. Die Detektionseinrichtung ist in dieser Variante bevorzugt ein Abstandssensor. Es kann ein Abstand oder eine Abstandänderung zwischen dem Abstandssensor und dem Messkörper ermittelt werden. Der Messkörper ist in dieser Variante insbesondere rotationssymmetrisch, insbesondere zylindrisch, scheibenförmig oder ringförmig. Vorzugsweise ist zumindest ein Anstandssensor auf eine Seitenfläche des Messkörpers gerichtet, insbesondere auf die Mantelfläche eines zylindrischen Messkörpers oder die Seitenfläche eines scheiben- oder ringförmigen Messkörpers. Hiermit kann eine seitliche Auslenkung des Messkörpers ermittelt werden, gegebenenfalls auch eine Verkippung. Vorzugsweise sind, kombinierbar mit den zuvor genannten Abstandssensoren, zumindest zwei Abstandssensoren auf eine Stirnfläche des Messkörpers gerichtet, insbesondere auf die kreisförmige Stirnfläche eines zylindrischen Messkörpers, die kreisförmige Stirnfläche eines scheibenförmigen Messkörpers oder die Ringfläche eines ringförmigen Messkörpers. Mit diesen Abstandssensoren kann eine Verkippung des Messkörpers ermittelt werden

Das Erzeugen des Moments in dem erfindungsgemäßen Verfahren kann erfolgen durch

- Positionieren einer Masse, insbesondere eines Werkstücks, auf dem Rotor, wobei der Schwerpunkt der Masse exzentrisch zu der Drehachse ist, und/oder
- Ausüben einer Kraft auf den Rotor durch Berühren des Rotors oder eines auf dem Rotor befindlichen Werkstücks mit einem Messsystem eines KMG, insbesondere durch Antasten mit einem Messsystem des KMG, insbesondere mit einem Taster.

Das Antasten kann an einer Position exzentrisch zur Drehachse des Rotors erfolgen. Wird z.B. mit einem Taster des KMG neben der Drehachse eine Kraft auf den Rotor ausgeübt, durch Antasten des Rotors oder eines auf dem Rotor positionieren Werkstücks, entsteht durch den Radius (Entfernung des Tasters von der Drehachse) und der Antastkraft des Tastsystems des KMG bzw. des Tasters ein Moment. Das Moment bewirkt eine Auslenkung des Rotors. Die Antastposition kann auch genau in der Drehachse liegen und das Antasten in einer Höhe (Z) von dem Rotor aus gesehen erfolgen. Durch einen vorhandenen Hebel (Z-Höhe) kann ein Moment entstehen, wenn die Antastkraft (teilweise) quer zur Drehachse wirkt.

Die Querkraft kann erzeugt werden durch Auslenkung oder Schräglage des Rotors, wodurch man eine Kraftkomponente erhält, die quer, insbesondere senkrecht, zu der Drehachse ausgerichtet ist, beispielsweise indem man die auf die Drehachse wirkende Gravitationskraft in zwei Kraftkomponenten zerlegt, von denen eine quer, insbesondere senkrecht, zur Achse ausgereichtet ist. Eine Querkraft kann alternativ oder stattdessen durch Antasten eines Werkstücks erzeugt werden.

Nachfolgend wird der Verfahrensschritt "Ermitteln der Auslenkung des Rotors und/oder des Positionsfehlers des Rotors bei einer Drehposition des Rotors" beschrieben:

Ein hier betrachteter Positionsfehler kann aus einer Auslenkung des Rotors resultieren. Es kann gemäß der Erfindung nur die Auslenkung ermittelt werden, die durch das Kippmoment und/oder die Querkraft erzeugt ist. Zusätzlich oder alternativ kann ein erzeugter Positionsfehler ermittelt werden. Zunächst wird die Ermittlung der Auslenkung erläutert, anschließend die Ermittlung eines Positionsfehlers.

Die Detektionseinrichtungen wirken im vorgesehenen Betrieb des Messsystems mit einem Messkörper zusammen. Ein beweglicher Messkörper oder zumindest drei beweglich gelagerte Detektionseinrichtungen werden in relative Bewegung versetzt, wenn der Rotor in Bewegung versetzt wird. Der bewegliche Messkörper und/oder die beweglichen Detektionseinrichtungen können mit dem Rotor derart gekoppelt sein, dass eine Bewegung des Rotors eine Bewegung des Messkörpers und/oder der Detektionseinrichtungen bewirkt.

Die im erfindungsgemäßen Verfahren genutzte relative Position oder die Änderung der relativen Position von Detektionseinrichtungen zu Messkörper ist eine anderweitige Position oder Änderung der relativen Position als diejenige, die sich aus der vorgesehenen Drehbewegung des Rotors um die Drehachse der Drehvorrichtung ergibt.

Die eigentlich vorgesehene und gewünschte Wirkungsweise und Funktion von Detektionseinrichtung sind wie folgt: Bei einer Drehung des Rotors um die vorgesehene Drehachse der Drehvorrichtung wird entweder der Messkörper oder die Detektionseinrichtungen mit rotiert und entweder der Messkörper oder die Detektionseinrichtungen vollziehen eine Drehbewegung um die vorgesehene Drehachse der Drehvorrichtung. Diese Bewegung wird zur Messung einer Drehposition verwendet. Es wird beispielsweise der Messkörper an den Detektionseinrichtung entlang bewegt und die Detektionseinrichtung kann eine Drehposition oder eine Drehpositionsänderung, insbesondere eine Winkel(positions)änderung detektieren, beispielsweise indem an der Detektionseinrichtung vorbei bewegte Markierungen von der Detektionseinrichtung erfasst werden. Alternativ kann die Detektionseinrichtung an einem drehfest positionierten Messkörper entlang bewegt werden.

In der vorliegenden Erfindung wird hingegen folgender Effekt genutzt, der aus einer fehlerhaften Bewegung des Rotors und infolgedessen einer fehlerhaften Bewegung des Messkörpers oder der Detektionseinrichtungen resultiert: Es erfolgt gemäß der Erfindung das Erzeugen eines Moments und/oder einer Kraft, das/die auf die Drehvorrichtung einwirkt bereits im Stillstand des Rotors, d.h. wenn keine Drehbewegung des Rotors erfolgt. Aus der Auslenkung des Rotors im Stillstand des Rotors resultiert eine im Vergleich zu vorher (d.h. vor der Auslenkung) veränderte relative Position von Detektionseinrichtungen zu dem Messkörper bzw. eine Änderung der relativen Position von Detektionseinrichtungen zu dem Messkörper. Diese veränderte relative Position bzw. Änderung der relativen Position ist also nicht durch eine Drehbewegung des Rotors um die vorgesehene Drehachse der Drehvorrichtung bewirkt sondern durch die Drehung des Rotors um eine Drehachse, die quer zur vorgesehenen Drehachse ist. Entsprechend kann die Auslenkung des Rotors aus der relativen (aus der Auslenkung resultierenden) Lage von Detektionseinrichtungen zu dem Messkörper bei Stillstand des Rotors ermittelt werden.

Bei der Auslenkung des Rotors kann der Messkörper um eine Rotationsachse rotiert werden, die quer zur vorgesehenen Drehachse des Rotors ist. Dies ist die gleiche Rotationsachse, um die auch der Rotor bei der Auslenkungsbewegung rotiert wird, wenn Messkörper und Rotor relativ zueinander unbeweglich miteinander gekoppelt sind.

Durch die Rotationsbewegung des Messkörpers um die Rotationsachse, die quer zur vorgesehenen Drehachse des Rotors ist, resultiert eine relative Bewegung von Messkörper und Detektionseinrichtungen, welche an bzw. von den Detektionseinrichtungen als eine translatorische Bewegung des Messkörpers relativ zu der jeweiligen Detektionseinrichtung detektiert wird, wobei diese translatorische Bewegung quer zur Erstreckung der Drehachse verläuft.

Alternativ kann bei der Auslenkung des Rotors eine Anordnung von Detektionseinrichtungen um eine Rotationsachse rotiert werden, die quer zur vorgesehenen Drehachse des Rotors ist. Dies ist die gleiche Rotationsachse, um die auch der Rotor bei der Auslenkungsbewegung rotiert wird, wenn die Anordnung der Detektionseinrichtungen und der Rotor relativ zueinander unbeweglich miteinander gekoppelt sind. In der Anordnung der Detektionseinrichtungen sind die Detektionseinrichtungen relativ zueinander örtlich fixiert. Durch die Rotationsbewegung der Anordnung der Detektionseinrichtungen um die Rotationsachse, die quer zur vorgesehenen Drehachse des Rotors ist, resultiert eine relative Bewegung von Messkörper und Detektionseinrichtungen, welche an bzw. von den Detektionseinrichtungen als eine translatorische Bewegung des Messkörpers relativ zu der jeweiligen Detektionseinrichtung detektiert wird. Die so an/von den Detektionseinrichtungen wahrgenommene translatorische Bewegung verläuft quer zur Erstreckung der Drehachse.

Es sind erfindungsgemäß zumindest drei Detektionseinrichtungen vorhanden, vorzugsweise vier.

Mit zumindest drei Detektionseinrichtungen kann eine Drehung des Rotors um die vorgesehene Drehachse der Drehvorrichtung von einer Auslenkung des Rotors unterschieden werden.

Die Detektionseinrichtungen und der Messkörper sind relativ zueinander beweglich. Der Messkörper kann beweglich, insbesondere drehbar, und die Detektionseinrichtungen stationär sein, beispielsweise ortsfest zu einem Stator. Der Messkörper ist insbesondere drehfest und translationsfest an einen Rotor gekoppelt und vollzieht eine Bewegung des Rotors mit. In einer alternativen Variante können die Detektionseinrichtungen beweglich, insbesondere drehbar, gelagert sein und der Messkörper kann stationär sein, beispielsweise ortsfest zu einem Stator. Kombinationen davon sind möglich. Maßgeblich ist die relative Beweglichkeit von Detektionseinrichtungen und Messkörper. Wenn der Messkörper drehbar gelagert ist, dann ist sie vorzugsweise um die Drehachse des Rotors drehbar gelagert. Wenn die Detektionseinrichtungen drehbar gelagert sind, dann sind sie vorzugsweise um die Drehachse des Rotors drehbar gelagert.

Es kann vorteilhafterweise eine Lagerung des Messkörpers, oder eine Lagerung der Detektionseinrichtungen, an eine Lagerung des Rotors der Drehvorrichtung gekoppelt sein. Hierbei ist das Drehpositionsmesssystem ohne unabhängige Lagerung des Messkörpers oder der Detektionseinrichtung ausgeführt, was besonders kostengünstig ist. Es ist in dieser Variante ein Vorteil der Erfindung, dass auf die sogenannte Eigenlagerung eines Messsystems, insbesondere die unabhängige Lagerung eines Messkörpers oder alternativ der Detektionseinrichtungen, verzichtet werden kann. Insbesondere können der Messkörper und der Rotor mit einem gemeinsamen Lager gelagert sein, oder die Detektionseinrichtungen und der Rotor mit einem gemeinsamen Lager gelagert sein. Ein Lager ist insbesondere ein Drehlager, die Lagerung eine Drehlagerung. Das Verfahren ist generell aber auch für Messsysteme mit Eigenlagerung eines Messkörpers oder einer Detektionseinrichtung anwendbar.

Der Messkörper kann eine bereits erwähnte Maßverkörperung sein, insbesondere wenn das Messsystem ein erwähntes Drehpositionsmesssystem ist. Eine Maßverkörperung stellt Werte einer Drehpositionsmessgröße oder eine Abfolge von Werten einer Drehpositionsmessgröße dar. Die Drehpositionsmessgröße kann eine Drehposition des Rotors darstellen oder in eine Drehposition, zum Beispiel einen Winkel, überführbar oder umrechenbar sein. Ein Beispiel für eine Maßverkörperung zur Drehpositionsermittlung ist eine Scheibe oder ein Ring mit Markierungen in vorgegebenem, vorzugsweise konstantem, Abstand. Der Markierungsabstand gibt beispielsweise ein Drehpositionsänderung, oder ein Drehpositionsinkrement, insbesondere ein Winkelinkrement, an.

Die Detektionseinrichtungen und die Maßverkörperung sind relativ so zueinander angeordnet, dass eine Relativposition, oder eine Relativpositionsänderung, bzw. eine Relativbewegung von Maßverkörperung und Detektionseinrichtungen, von der Detektionseinrichtung ermittelbar ist.

Mit den Detektionseinrichtungen können Werte einer Drehpositionsmessgröße oder Wertänderungen der Drehpositionsmessgröße detektiert werden, zum Beispiel die Markierungen oder eine Bewegung von Markierungen relativ zu den Detektionseinrichtungen.

Beispielhafte Detektionseinrichtungen sind magneto-resistive, magnetische, kapazitive oder optische Detektionseinrichtungen.

Das Messsystem, insbesondere ein Drehpositionsmesssystem, kann ein inkrementell oder ein absolut messendes Messsystem sein.

Es werden wie zuvor erwähnt zumindest drei Detektionseinrichtungen zur Detektion einer relativen Position von Detektionseinrichtung und Messkörper und/oder zur Detektion einer Änderung der relativen Position von Detektionseinrichtung und Messkörper eingesetzt. Drei Detektionseinrichtungen können zueinander versetzt entlang eines Kreises mit Mittelpunkt im Drehpunkt (bzw. in der Drehachse) des Rotors angeordnet sein. Anders ausgedrückt können die Detektionseinrichtungen um die Drehachse der Drehvorrichtung verteilt angeordnet sein.

Insbesondere ist der Messkörper, zylinderförmig, scheibenförmig (worunter ein Zylinder relativ geringer Höhe zu verstehen ist) oder ringförmig.

Der Messkörper hat insbesondere eine kreisförmige oder im Wesentlichen kreisförmige Außenumfangslinie.

Wenn der Messkörper eine Maßverkörperung ist, sind in einer Variante Detektionseinrichtungen axial auf eine scheibenförmige oder ringförmige Maßverkörperung ausgerichtet. Anders ausgedrückt wird von den Sensoren eine Ringfläche oder Kreisfläche erfasst, auf der beispielsweise erfassbare Markierungen angeordnet sind. Noch anders ausgedrückt sind die Detektionseinrichtungen dann so zur Maßverkörperung hin orientiert, dass sie von oben und/oder von unten auf eine sich horizontal oder im Wesentlichen horizontal erstreckende Kreis- oder Ringfläche einer Maßverkörperung schauen.

In einer Ausführungsform kann das Ermitteln der Auslenkung erfolgen, wenn ein Messsystem vorhanden ist, das vier Detektionseinrichtungen aufweist, mit denen jeweils eine Position oder Positionsänderung des Messkörpers relativ zu den Detektionseinrichtungen detektiert werden kann. Vier Detektionseinrichtungen sind vorzugsweise um jeweils etwa 80 - 110°, vorzugsweise um etwa oder genau 90°, um die Drehachse herum verteilt angeordnet. Die Detektionseinrichtungen können in dem genannten Winkel(bereich) zueinander versetzt entlang eines Kreises mit Mittelpunkt im Drehpunkt (bzw. in der Drehachse) des Rotors angeordnet sein. Anders ausgedrückt sind die vier Detektionseinrichtungen entlang eines Kreises, dessen Mittelpunkt mit in der Drehachse des Rotors zusammenfällt, derart angeordnet dass ihre Relativwinkel zueinander jeweils (d.h. je Relativwinkel), 80-110°, vorzugsweise 90° oder etwa 90° sind. Der Begriff "etwa 90°" bedeutet insbesondere einen Relativwinkel von 85 - 95. Ein Relativwinkel bedeutet einen Winkel, den eine erste Linie und eine zweite Linie einschließen, wobei die erste Linie sich von der Drehachse des Rotors bis zu einer ersten Detektionseinrichtung erstreckt, vorzugsweise zu einem Mittelpunkt der Detektionseinrichtung, und die zweite Linie sich von der Drehachse des Rotors bis zu einer benachbarten Detektionseinrichtung erstreckt, vorzugsweise zu einem Mittelpunkt der benachbarten Detektionseinrichtung. Die erwähnten Linien sind gedachte, virtuelle Linien. Insbesondere ist der Messkörper scheibenförmig oder ringförmig. Der Messkörper hat insbesondere eine kreisförmige oder im wesentlich kreisförmige Außenumfangslinie. Entlang der scheibenförmigen oder ringförmigen Maßverkörperung, insbesondere entlang einer kreisförmigen oder im wesentlich kreisförmigen Außenumfangslinie können die Detektionseinrichtungen um etwa oder genau 90° zueinander versetzt angeordnet sein und mit dem Messkörper zusammen wirken.

Bei Verwendung von vier Detektionseinrichtungen kann mit einem ersten Paar Detektionseinrichtungen ein vektorieller Anteil einer Auslenkung in einer ersten Raumrichtung, beispielsweise einer X-Richtung, von

- einer Relativbewegung der Detektionseinrichtungen zu einem Messkörper, und/oder
- einer Auslenkung des Rotors und/oder
- eines aus der Relativbewegung und/oder der Auslenkung ermittelbaren Moments in der ersten Raumrichtung

ermittelt werden. Diese Detektionseinrichtungen des ersten Paars Detektionseinrichtungen sind vorzugsweise um 180° entlang eines Kreises mit Mittelpunkt im Drehpunkt (bzw. in der Drehachse) des Rotors zueinander versetzt, liegen also gegenüber.

Bei Verwendung von vier Detektionseinrichtungen kann mit einem zweiten Paar Detektionseinrichtungen ein vektorieller Anteil einer Auslenkung in einer zweiten Raumrichtung, beispielsweise einer Y-Richtung, von

- einer Relativbewegung der Detektionseinrichtungen zu einem Messkörper, und/oder
- einer Auslenkung des Rotors und/oder
- eines aus der Relativbewegung und/oder der Auslenkung ermittelbaren Moments in der zweiten Raumrichtung

ermittelt werden. Diese Detektionseinrichtungen des zweiten Paars Detektionseinrichtungen sind vorzugsweise um 180° entlang eines Kreises mit Mittelpunkt im Drehpunkt (bzw. in der Drehachse) des Rotors zueinander versetzt, liegen also gegenüber.

Das erste Paar Detektionseinrichtungen ist vorzugsweise relativ zu dem zweiten Paar Detektionseinrichtungen um 90° oder etwa 90° entlang eines Kreises mit Mittelpunkt im Drehpunkt (bzw. in der Drehachse) des Rotors versetzt, sodass alle vier Detektionseinrichtungen vorzugsweise jeweils um 90° oder etwa 90° zueinander versetzt sind.

Nachfolgend wird die Ermittlung des Positionsfehlers erläutert:
Der in dieser Erfindung so bezeichnete Positionsfehler, hier auch bezeichnet als Drehpositionsfehler oder Exzenterfehler, beschreibt eine Abweichung eines Drehpositionswerts, der von einem Drehpositionsmesssystem der Drehvorrichtung angezeigt wird, von einem als korrekt angesehenen, "tatsächlichen" Drehpositionswert, der auch als Referenz-Drehpositionswert bezeichnet wird. Der Drehpositionsfehler gibt vorzugsweise nur den Fehleranteil an, der durch das Moment und/oder die Querkraft verursacht wird. Weitere Fehler oder Fehleranteile, z.B. der Teilungsfehler eines Maßstabs werden vorzugsweise entweder vernachlässigt, oder durch eine gesonderte Korrektur ermittelt und gegebenenfalls eliminiert.

Insbesondere wird bei dem Ermitteln des Positionsfehlers der Drehvorrichtung der Fehler eines Drehpositionsmesssystems, insbesondere eines Winkelmesssystems, der Drehvorrichtung bestimmt. Das Drehpositionsmesssystem weist eine vorangehend genannte Maßverkörperung und die vorangehend genannten Detektionseinrichtungen auf. Das Drehpositionsmesssystem ist beispielsweise in die Drehvorrichtung integriert oder der Drehvorrichtung zugeordnet und ist insbesondere ein Winkelpositionsmesssystem.

Ein Referenz-Drehpositionswert kann ein Wert sein, der von einer Referenzvorrichtung angezeigt wird, deren Drehposition als hochgenau und korrekt angenommen wird, und deren Drehpositionswert mit dem Drehpositionswert, der von einem Drehpositionsermittlungssystem der Drehvorrichtung angezeigt wird, verglichen wird. Das Ermitteln des Positionsfehlers der Drehvorrichtung bei der zumindest einen Drehposition kann somit mit einem Referenzmesssystem oder einer erwähnten Referenzvorrichtung erfolgen.

Beispielsweise weist eine Referenzvorrichtung ein hochgenaues, kalibriertes Drehpositionsmesssystem auf. Ein Beispiel einer Referenzvorrichtung ist eine Referenzdrehvorrichtung, insbesondere ein Referenzdrehtisch, womit eine Drehposition hochgenau messbar ist. Ein Verfahren zur Ermittlung des Drehpositionsfehlers mit einer Referenzdrehvorrichtung ist beispielsweise beschrieben in der internationalen Patentanmeldung PCT/EP 2013/050328. Weiterhin sind Verfahren zur Ermittlung eines Drehpositionsfehlers bekannt, bei denen ein kalibriertes Spiegelpolygon eingesetzt wird.

Der Positionsfehler macht sich beispielsweise darin bemerkbar, dass von einem Drehpositionsmesssystem einer Drehvorrichtung ein von der tatsächlichen Drehposition abweichender Wert angezeigt wird. Der in dieser Erfindung betrachtete Positionsfehler ist verursacht durch ein Moment das quer, insbesondere senkrecht, zur Drehachse der Drehvorrichtung steht, also quer, insbesondere senkrecht, dazu einwirkt, und/oder eine Kraft, die quer, insbesondere senkrecht, zur Drehachse steht, also quer, insbesondere senkrecht, dazu einwirkt. Das Moment und/oder die Kraft beeinflusst ein Drehpositionsmesssystem derart, dass von diesem ein fehlerhafter Drehpositionswert angezeigt wird. Ist eine Maßverkörperung eines Drehpositionsmesssystems, zum Beispiel eine Scheibe mit detektierbarem Strichmaß, beispielsweise mit einem Rotor der Drehvorrichtung an einem gemeinsamen Lager gelagert, bewirkt eine Auslenkung des Rotors auch eine Auslenkung oder Verschiebung der Maßverkörperung relativ zu einer Detektionseinrichtung, die an der Maßverkörperung einen Drehpositionswert detektiert. Dadurch entsteht ein Drehpositionsfehler. Ein Drehpositionsfehler kann aber auch entstehen, wenn keine gemeinsame Lagerung vorliegt, aber beispielsweise der Rotor und die Maßverkörperung anderweitig mechanisch gekoppelt sind, sodass ein Bewegungsfehler des Rotors einen Bewegungsfehler der Maßverkörperung bewirkt.

Nachfolgend wird beschrieben, wie ein Zusammenhang zwischen

i) Moment und/oder Kraft, und
ii) Auslenkung und/oder Positionsfehler

ausgedrückt und erhalten werden kann.

Der Zusammenhang zur Ermittlung des Moments und/oder der Kraft aus der Auslenkung oder dem Positionsfehler ist eine unten erläuterte (Werte)Zuordnung oder ein unten erläuterter funktionaler Zusammenhang.

Der Zusammenhang ist insbesondere ein Zusammenhang zwischen

i) Moment und/oder Kraft, und
ii) einer maximalen Auslenkung oder einem maximalen Positionsfehler.

Vorzugsweise folgt ein Wert der Auslenkung oder ein Wert eines Positionsfehlers einer Winkelfunktion. Die maximale Auslenkung oder maximale Positionsfehler kann definiert sein als die Hälfte des Abstands zwischen Minimum und Maximum auf der Ordinate der Winkelfunktion (Amplitude, halbe Fehlerspanne) oder als Abstand zwischen Minimum und Maximum auf der Ordinate der Winkelfunktion (volle Fehlerspanne). Der Zusammenhang, insbesondere ein funktionaler Zusammenhang, zwischen Moment und/oder Kraft und maximaler Auslenkung oder maximalem Positionsfehler kann linear sein oder durch ein Polynom beschreibbar sein.

Der Zusammenhang kann einen oder mehrere Drehpositionswerte enthalten. Die eine eingestellte Drehposition in dem erfindungsgemäßen Verfahren kann einem dieser Drehpositionswerte des Zusammenhangs entsprechen, sodass bei dieser einen, eingestellten Drehposition mit dem Zusammenhang das Moment und/oder die Kraft ermittelbar sind. Wird eine unterschiedliche Drehposition (zum Beispiel anderer Winkelwert) als die eine eingestellte Drehposition gewählt, kann mit dem Zusammenhang das Moment und/oder die Kraft ermittelt werden, da der Zusammenhang, der mehrere Drehpositionswerte enthält, auch für diesen Drehpositionswert bekannt ist.

Der Positionsfehler und die Auslenkung des Rotors können abhängig sein von der Drehposition des Rotors bzw. veränderlich sein mit der Drehposition, wobei in diesem Fall vorzugsweise mehrere Drehpositionswerte berücksichtigt werden.

Die Zuordnung kann Informationen zu Momenten und zugeordneten Auslenkungen oder Positionsfehlern bei einer Drehposition oder bei mehreren Drehpositionen enthalten.

Beispielhaft kann die Zuordnung eine Ansammlung von Wertepaaren oder Wertetripeln sein, die alternativ wie folgt aussehen können:

- Moment und Auslenkung
- Moment und Positionsfehler, oder
- Moment, Auslenkung und Positionsfehler

Optional kann zu diesen Wertepaaren oder -tripeln eine konstante oder variable Drehposition hinzukommen.
Ein Zusammenhang, insbesondere eine Zuordnung, kann alternativ oder zusätzlich Informationen zu Kräften und zugeordneten Auslenkungen oder Positionsfehlern bei einer Drehposition oder bei mehreren Drehpositionen enthalten. Beispielhaft kann eine Zuordnung eine Ansammlung von Wertepaaren, Wertetripeln, oder Wertequartetten sein, die alternativ wie folgt aussehen können

- Kraft und Auslenkung,
- Kraft und Positionsfehler,
- Kraft, Auslenkung und Positionsfehler
- Kraft, Moment und Auslenkung,
- Kraft, Moment und Positionsfehler, oder
- Kraft, Moment, Auslenkung und Positionsfehler

Optional kann zu diesen Wertepaaren, -tripeln oder -quartetten kann eine konstante oder variable Drehposition hinzukommen.
Eine Zuordnung kann beispielsweise in tabellarischer und vorzugsweise elektronisch speicherbarer und auslesbarer Form vorliegen. Die Speicherung kann in einer Speichereinrichtung erfolgen, beispielsweise eines KMG. Die Zuordnung kann beliebig viele solcher Wertepaare/tripel/quartette umfassen. Mit Hilfe der Zuordnung kann ermittelt werden, wie hoch beispielsweise ein Moment, oder eine Querkraft, bei einer bestimmten Auslenkung in einer bestimmten Drehposition ist. Mit der Zuordnung kann jede der genannten Größen in Abhängigkeit von jeweils den anderen verbleibenden Größen ermittelt werden.
Der funktionale Zusammenhang kann in Form einer mathematischen Funktion vorliegen. Beispielsweise kann der funktionale Zusammenhang einen der folgenden Zusammenhänge angeben:

- Moment als Funktion der Auslenkung und optional der Drehposition
- Moment als Funktion des Positionsfehles und optional der Drehposition
- Querkraft als Funktion der Auslenkung und optional der Drehposition
- Querkraft als Funktion des Positionsfehles und optional der Drehposition
- Moment und Querkraft als Funktion der Auslenkung und optional der Drehposition
- Moment und Querkraft als Funktion des Positionsfehles und optional der Drehposition

Weitere Variable können hinzutreten, wie Lage einer Masse oder eines Masseschwerpunkts (z.B. Werkstück) auf der Drehvorrichtung, insbesondere im Gerätekoordinatensystem der Drehvorrichtung, oder Lage einer Masse, oder eines Masseschwerpunkts relativ zu einer Detektionseinrichtung eines Messsystems. Ein funktionaler Zusammenhang ist insbesondere eine Rechenvorschrift, in die eine oder mehr Größen als Variablen eingehen, beispielsweise eine Wert einer Auslenkung oder eine Drehposition, und aus der bei Einsetzen der Variablen die abhängige Größe, wie Moment oder Querkraft, berechenbar ist.
Es können erfindungsgemäß ein Moment oder eine Querkraft in verschiedenen Komponenten, insbesondere Vektorkomponenten dargestellt werden, beispielsweise als X- und Y-Komponente. Es kann jede Vektorkomponente durch eine Zuordnung beschrieben oder durch einen funktionalen Zusammenhang ausgedrückt werden. Aus den Komponenten kann ein resultierendes Moment (auch bezeichnet als Gesamtmoment) oder eine resultierende Querkraft (auch bezeichnet als Gesamtquerkraft) ermittelt, insbesondere berechnet werden. Der funktionale Zusammenhang, insbesondere eine Rechenvorschrift, kann in elektronisch speicherbarer und auslesbarer Form vorliegen. Die Speicherung kann in einer Speichereinrichtung erfolgen, beispielsweise eines KMG.
Ein erwähnter Zusammenhang ist erhältlich nach einem Verfahren, aufweisend:

a) Erzeugen zumindest einen Moments und/oder zumindest einer Kraft, das/die quer zu der Drehachse des Rotors der Drehvorrichtung ist, bei zumindest einer Drehposition des Rotors
b) Ermitteln einer Auslenkung und/oder eines Positionsfehlers der Drehvorrichtung, welche(r) durch das zumindest eine Moment und/oder die zumindest eine Kraft bei der zumindest einen Drehposition verursacht ist,
c) Ermitteln eines Zusammenhangs zwischen (i) Moment und/oder Kraft und (ii) Auslenkung und/oder Positionsfehler.

Auf Varianten zur Erzeugung eines Moments oder einer Kraft wird an anderer Stelle dieser Offenbarung eingegangen, ebenso auf Arten zum Ermitteln einer Auslenkung oder eines Positionsfehlers.

Das Ermitteln des Zusammenhangs in Form einer Zuordnung kann erfolgen durch: Zuordnen des zumindest einen Moments, und/oder Zuordnen zumindest einen Kraft, zu der jeweils bei diesem Moment und/oder dieser Kraft ermittelten Auslenkung, und/oder zu dem jeweils bei diesem Moment oder dieser Kraft ermittelten Positionsfehler bei der zumindest einen Drehposition. Das Ermitteln eines funktionalen Zusammenhangs kann erfolgen durch Bildung einer Zuordnung und anschließender Analyse der Zuordnung. Beispielsweise kann eine mathematische Funktion aufgefunden werden, welche die Wertezuordnung ausdrückt, beispielsweise mittels bekannter Anpassungsverfahren.

Das Verfahren zur Ermittlung eines Zusammenhangs kann außerhalb oder innerhalb eines KMG durchgeführt werden. Das Verfahren kann einmalig oder mehrmals für eine bestimmte Bauform einer Drehvorrichtung ermittelt werden, bevor diese (wieder) in ein KMG eingebaut wird. Zum Beispiel kann das Verfahren nach einem Fertigungsprozess einer Drehvorrichtung durchgeführt werden, insbesondere im Rahmen einer Endabnahme. in einer weiteren Variante kann das Verfahren in einem KMG, bei eingebauter Drehvorrichtung, erfolgen, zum Beispiel in Vorbereitung des Messbetriebs bzw. vor dem Messbetrieb, oder in einer Messpause.

Das erzeugte Moment ist in dem oben angegebenen Verfahren zur Ermittlung eines Zusammenhangs seinem Wert nach bekannt oder sein Wert ist bestimmbar. Das Moment wird beispielsweise erzeugt durch eine oder mehrere der folgenden Maßnahmen:

- Positionieren einer Masse auf dem Rotor der Drehvorrichtung, wobei der Schwerpunkt der Masse vorzugsweise exzentrisch zu der Drehachse des Rotors ist bzw. neben der Drehachse des Rotors lokalisiert ist und/oder
- Ausüben einer Kraft auf den Rotor durch ein Antasten des Rotors oder eines auf dem Rotor befindlichen Gegenstandes (z.B. Werkstücks).

Beispielsweise kann zur Bestimmung des Wertes eines ersten oder eines weiteren Moments das Gewicht eines Gegenstands einer bekannten Masse und ein exzentrischer Versatz des Gegenstandes auf dem Rotor relativ zur Drehachse des Rotors gemessen und daraus das Moment berechnet werden.

Ferner stehen folgende Methoden zur Ermittlung der Größe eines erzeugten Moments, das quer, insbesondere senkrecht, zu der Drehachse eines Rotors der Drehvorrichtung ist, zur Verfügung:

- Eine Auslenkung des Drehachsrotors, die sich am Ort einer Maßverkörperung des Winkelmesssystems als Translation auswirkt, könnte durch Abstandssensoren gemessen werden. Es können hierzu bereits vorhandene Abstandssensoren eines Messsystems eingesetzt werden. Es kann ein Vergleich von Messwerten von Abstandssensoren vor und nach Aufbringung des Moments ermittelt werden. Oder es kann ein absolut messender Sensor eingesetzt werden, bei dem anhand eines Messwertes eine Auslenkung ermittelt werden kann,
- Wenn Abstandssensoren eingesetzt werden, wie im vorigen Punkt beschrieben, dann kann der Abstandssensor jeweils auf einen bereits erwähnten Messkörper gerichtet sein, der an dem Rotor des Drehtisches angebracht ist und vorzugsweise rotationssymmetrisch ist. Messkörper in Form eines zylindrischen oder (doppel)kugelförmigen Messkörpers, auf welche ein Sensor gerichtet sein kann, sind beispielsweise bekannt aus der internationalen Patentanmeldung WO 2013/007285 A1, insbesondere Fig. 1 bis 4 und 12.

Bei den in den obigen beiden genannten Punkten genannten Verfahren kann zunächst ein Zusammenhang zwischen (Kipp-)Moment und Kippwinkel, gemessen mit Abstandssensoren, ermittelt werden. Dieser Zusammenhang kann ermittelt werden, indem man z.B. eine bekannte Masse in bekanntem Abstand von der Drehachse auf den Rotor aufbringt und drehpositionsabhängig eine Auslenkung des Drehachsrotors bestimmt. Da Masse und Massenschwerpunkt sowie der Abstand des Massenschwerpunkts zur Drehachse bekannt sind, ist auch das Kippmoment bekannt. Es kann die Verkippung des Rotors mit den Abstandssensoren gemessen werden. Bei Anlegen verschiedener Kippmomente kann die Verkippung kippmomentabhängig bestimmt werden. Entsprechend kann der Zusammenhang zwischen Kippmoment und Verkippung ermittelt werden, sodass bei Anlegen eines unbekannten Kippmoments aus der Verkippung des Rotors und dem bekannten Zusammenhang das Kippmoment ermittelt werden kann.

Eine erzeugte Querkraft ist in dem oben angegebenen Verfahren zur Ermittlung eines Zusammenhangs ihrem Wert nach bekannt oder ihr Wert ist bestimmbar. Die erste Kraft und die optionale, zumindest eine weitere Kraft wird vorzugsweise erzeugt durch Auslenkung oder Schräglage des Rotors, wodurch man eine Kraftkomponente erhält, die quer, insbesondere senkrecht, zu der Drehachse ausgerichtet ist, beispielsweise indem man die auf die Drehachse wirkende Gravitationskraft in zwei Kraftkomponenten zerlegt, von denen eine quer, insbesondere senkrecht, zur Achse ausgereichtet ist. Eine weitere Variante ist ein Ausüben einer Querkraft durch ein Tastsystem, beispielsweise eines KMG.

Ein funktionaler Zusammenhang zwischen (i) Moment und/oder Kraft und (ii) Auslenkung und/oder Positionsfehler kann durch Auswerten der erhaltenen Werte für (i) Moment und/oder Kraft und (ii) Auslenkung und/oder Positionsfehler erhalten werden. Beispielsweise kann mit bekannten Näherungsmethoden eine mathematische Funktion ermittelt werden.

Nachfolgend werden weitere bevorzugte Ausführungsformen und Varianten der Erfindung beschrieben:

In einer Ausführungsform der Erfindung erfolgt die Ausgabe einer Warnung und/oder Verhindern einer Drehbewegung des Rotors, wenn ein vorgegebener Grenzwert des Moments und/oder einer Kraft erreicht oder überschritten wird. Es kann dadurch vor einer Überlastung des Rotors oder eines Lagers, an dem der Rotor drehbeweglich gelagert ist, gewarnt und eine Überlastung vermieden werden. Insbesondere bei Luftlagern ist dies von Vorteil.

In einer Ausführungsform der Erfindung wird mit dem mit dem Verfahren eine möglichst momentenfreie und/oder kräftefreie Positionierung der Masse ermittelt. Die Masse wird auf dem Rotor derart positioniert, dass die Auslenkung oder der ermittelte Positionsfehler minimal oder Null ist.

Bei dieser Ausführungsform kann das Verfahren zur Zentrierung von Werkstücken benutzt werden. Das Werkstück ist vollständig zentriert, wenn kein Moment mehr vorhanden ist. Der Schwerpunkt des Werkstücks ist ebenfalls zentriert, wenn kein Moment mehr vorhanden ist. Bei einem symmetrischen Werkstück sind das Werkstück und der Schwerpunkt zentriert. Ansonsten erfolgt, bei unsymmetrischen Werkstücken, nur die Zentrierung des Schwerpunkts.

In einer Erweiterung des erfindungsgemäßen Verfahrens können ermittelte Kippmomente und/oder Querkräfte aufgezeichnet werden. Es ist beispielsweise möglich, durch eine solche Aufzeichnung oder Speicherung eine in der Vergangenheit stattgefundene Überlastung einer Drehachse durch ein zu hohes Kippmoment oder eine zu hohe Querkraft nachzuweisen.

Generell ist es möglich, das Verfahren mit allen herkömmlichen Messsystemen, insbesondere herkömmlichen Lage- oder Drehpositionsmesssystemen, durchzuführen. Nachfolgend wird erläutert, wie in einem erfindungsgemäßen Verfahren der Phasenwinkel des Schwerpunkts einer Masse, beispielsweise eines Werkstücks, ermittelt werden kann. Ferner wird ein gesondertes Verfahren erläutert zur Ermittlung eines Phasenwinkels des Schwerpunkts einer Masse.

Das oben beschriebene Verfahren zur Ermittlung eines Kippmoments und/oder einer Querkraft kann weiterhin aufweisen:

- Ermitteln eines Phasenwinkels des Schwerpunkts der Masse in einem Koordinatensystem eines Stators der Drehvorrichtung und/oder in einem Koordinatensystem des Rotors aus der Auslenkung des Rotors oder dem Positionsfehler des Rotors.

In dieser Verfahrensvariante wird zusätzlich zu dem Kippmoment oder der Querkraft die Lage der Masse oder des Schwerpunkts der Masse, insbesondere eines Werkstücks, bestimmt.

Das erwähnte Rotor- oder Statorkoordinatensystem hat seinen Ursprung beispielsweise im Mittelpunkt oder Drehpunkt des Rotors. Beispielsweise ist das Koordinatensystem ein zweidimensionales Koordinatensystem, in dem der Phasenwinkel des Schwerpunkts der Masse beschreibbar ist.

In einer weiteren Variante des Verfahrens weist das Verfahren auf:

- Ermitteln einer Auslenkung des Rotors in einer ersten Raumrichtung und einer Auslenkung des Rotors in einer zweiten Raumrichtung, bei einer Drehposition des Rotors,
- Ermitteln des Phasenwinkels des Schwerpunkts der Masse aus der Auslenkung in die erste Raumrichtung und aus der Auslenkung in die zweite Raumrichtung.

Dieses Verfahren ist besonders vorteilhaft, da zumindest drei, vorzugsweise vier Detektionseinrichtungen mit einem Messkörper zusammenwirken. Hierbei ist keine Drehbewegung erforderlich, sondern der Phasenwinkel des Masseschwerpunkts kann bereits bei einer Drehposition des Rotors, die voreingestellt sein kann, ermittelt werden.

In einem weiteren Aspekt betrifft die Erfindung ein eigenständiges Verfahren zur Ermittlung des Phasenwinkels des Schwerpunkts einer Masse auf einem Rotor einer Drehvorrichtung in einem Koordinatensystem eines Stators der Drehvorrichtung und/oder in einem Koordinatensystem des Rotors

wobei die Drehvorrichtung ein Drehpositionsmesssystem aufweist, welches aufweist:

- einen Messkörper,
- zumindest drei Detektionseinrichtungen zur Detektion einer relativen Position der Detektionseinrichtungen zu dem Messkörper und/oder zur Detektion einer Änderung der relativen Position der Detektionseinrichtungen zu dem Messkörper,

und wobei das Verfahren folgende Schritte aufweist:

- Positionieren einer Masse auf einem Rotor der Drehvorrichtung,

- Ermitteln einer Auslenkung des Rotors bei einer eingestellten Drehposition des Rotors, aus der relativen Position der zumindest drei Detektionseinrichtungen zu dem Messkörper,
- Ermitteln des Phasenwinkels des Schwerpunkts der Masse in der einen eingestellten Drehposition aus der Auslenkung des Rotors.

Die Masse kann, wie generell in dieser Erfindung, eine Werkstückmasse sein.

Das Ermitteln einer Auslenkung des Rotors bei einer Drehposition mit einem Drehpositionsmesssystem, das einen Messkörper und Detektionseinrichtungen aufweist, wurde bereits zuvor in dieser Beschreibung erläutert und hierauf wird vollumfänglich Bezug genommen.

Das Ermitteln des Phasenwinkels des Schwerpunkts der Masse in einem Koordinatensystem eines Stators und/oder eines Rotors aus einer Auslenkung des Rotors wurde allgemein und in speziellen Varianten bereits oben erläutert.

Nachfolgend wird die Erfindung anhand von Ausführungsbeispielen beschrieben. Es zeigen:

Fig. 1   einen Positionsfehler eines Drehtisches in Abhängigkeit des Rotor-Drehwinkels und des aufgebrachten Kippmoments,

Fig. 2   die Amplitude eines Fehlers der Grundwelle (halbe maximale Fehlerspanne) in Abhängigkeit des aufgebrachten Kippmoments

Fig. 3   die schematische Draufsicht auf eine Drehvorrichtung mit einer aufgebrachten Masse,

Fig. 4   Eine Einleitung von Gewichtskraft in der 0° Richtung bei einer Drehvorrichtung mit einer Maßverkörperung

Fig. 5   Eine Einleitung von Gewichtskraft in der 90° Richtung bei einer Drehvorrichtung mit einer Maßverkörperung

Fig. 6   Auslenkung des Rotors mit aufgebrachter Gewichtskraft, in Abhängigkeit des Drehwinkels, gemessen in Inkrementen der Maßverkörperungen

Fig. 7a, b   Eine alternative Ausführungsform einer Drehvorrichtung zur Durchführung eines erfindungsgemäßen Verfahrens, eine Drehvorrichtung mit Messkörper und Abstandssensoren,

Fig. 8   Darstellung des atan2-Zusammenhangs zur Bestimmung des Phasenwinkels einer Masse beim Einsatz von vier Leseköpfen,

Fig. 9   Verfahrensablauf eines Verfahrens zur Ermittlung eines Moments und/oder einer Kraft,

Fig. 10   Verfahrensablauf eines Verfahrens zur Ermittlung eines Phasenwinkels eines Masseschwerpunkts und

Fig. 11   eine Anordnung von Maßverkörperung und drei Detektionseinrichtungen

1. Allgemeine Betrachtungen

Kippmomente, die auf den Rotor der Drehachse wirken, verursachen eine Verkippung des Rotors. Da meist ein Hebel zwischen Drehpunkt (Lagerstelle) und Maßverkörperung vorhanden ist, bewirkt die Verkippung eine Exzentrizität der Maßverkörperung. Eine Exzentrizität der Maßverkörperung bewirkt einen sogenannten Exzenterfehler auf den gemessenen Winkelpositionen. Der Positionsfehler ist am größten, wenn die Verschiebung der Maßverkörperung senkrecht zum Winkelsensor bzw. Lesekopf erfolgt und berechnet sich wie folgt:

$$\alpha = s/r$$

mit $\alpha$ = Positionsfehler
s = Amplitude des Exzenters
r = Radius der Maßverkörperung

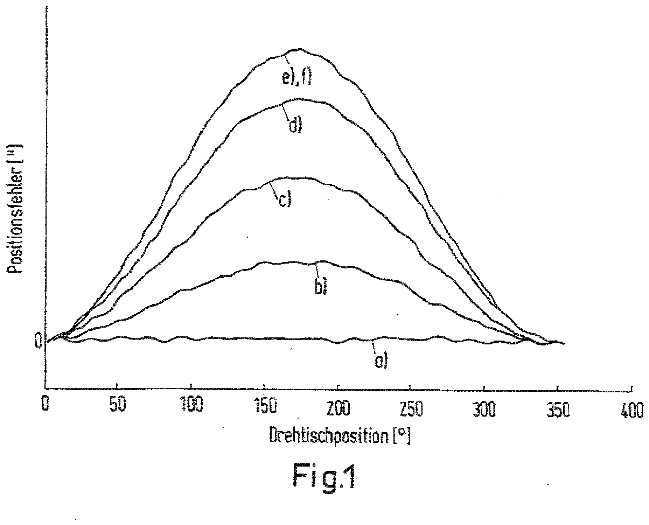

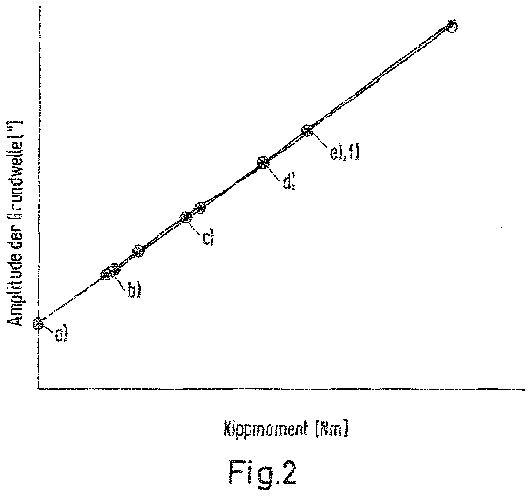

Versuche haben gezeigt, dass der Zusammenhang zwischen der Amplitude des sogenannten Exzenterfehlers und dem verursachenden Kippmoment häufig gutmütig verläuft und z.B. durch eine Gerade oder ein Polynom beschreibbar ist. Die Versuche wurden mit einem luftgelagerten Drehtisch durchgeführt. Es wird angenommen, dass die Ergebnisse auch auf wälzgelagerte Drehtische übertragen werden können. Die Ergebnisse in den Fig. 1 und 2 wurden im Rahmen eines Kalibriervorgangs, durch Vergleich der Positionswerte mit einem Referenzdrehtisch erzeugt, wie nachfolgend beschrieben.

2. Ermittlung eines Zusammenhangs zwischen Kippmoment und Positionsfehler

Nachfolgend wird unter den Punkten 1 und 2 die Ermittlung eines Zusammenhangs zwischen Kippmoment und Positionsfehler beispielhaft gezeigt.

2.1. Standard CAA-Datenaufnahme ohne Kippmoment

Zur Messung des Positionsfehlers ohne Kippmoment wurde ein Aufbau verwendet, wie in der internationalen Patentanmeldung PCT/EP2013/050328 in Fig. 1 schematisch dargestellt. Diese internationale Patentanmeldung beschreibt auch detailliert ein Verfahren zur Ermittlung des Drehpositionsfehlers eines Drehtisches mit Hilfe eines Referenzdrehtisches, insbesondere im Beispielteil beginnend auf Seite 81.

2.2 Computer Aided Accuracy (CAA)-Datenaufnahme mit Kippmoment

Es wurde der gleiche Versuchsaufbau eingesetzt wie unter Punkt 1 bzw. in PCT/EP 2013/050328 in Fig. 1. Der Drehtisch wies eine Lagerüberwachung auf, mit der ein aufgebrachtes Kippmoment ermittelt werden kann. Das Lager des Drehtisches weist eine Sensorik auf, die beispielhaft in der Patentanmeldung DE 10 2008 058 198 A1 beschrieben ist. Bei verschiedenen, auf den Drehteller des zu vermessenden Drehtisches aufgebrachten Massen und aus deren Gewichtskraft sich ergebenden Kippmomenten, wurden verschiedene Winkelpositionen des Drehtisches eingestellt. Die Massen wurden exzentrisch zur Drehachse auf dem Rotor-Drehteller positioniert. Aus der Lagerüberwachung des zu vermessenden Drehtisches (Prüfling) wurden das Kippmoment und die Phase zwischen der Nullposition des Stator-Koordinatensystems des Drehtisches und der aufgebrachten Masse ermittelt bzw. aufgezeichnet. Es wurden 12 Datensätze a)-f) mit unterschiedlichen, ansteigenden Kippmomenten und, bei Vorhandensein eines Kippmoments, mit gleicher Phase erstellt. Fig. 1 zeigt das sich ergebende Fehlerbild.

Alle in Fig. 1 gezeigten Positionsfehlerkurven lassen sich im Bogenmaß durch eine Cosinus-Funktion beschreiben. Der Zusammenhang zwischen Positionsfehler und Kippmoment ist

$$\text{Positionsfehler} = -M*c*\cos(t+pM-pRH)$$

mit

M = aktuelles Kippmoment im Drehtisch-Stator-Koordinatensystem [Nm]
c = Skalierungsfaktor "Positionsfehler pro Newton-Meter" in [Rad/Nm]
t = Drehtischposition im Drehtisch-Stator-Koordinatensystem [Rad]
pM = Phasenwinkel der aufgebrachten Masse und des dadurch erzeugten Kippmoments im Drehtisch-Stator-Koordinatensystem [Rad], relativ zu dessen gesetzten Nullpunkt
pRH = Lesekopfposition [Rad] im Drehtisch-Stator-Koordinatensystem relativ zum gesetzten Nullpunkt des Drehtisch-Stator-Koordinatensystems

Durch die Variablen pM und pRH lassen sich verschiedene Positionen sowohl einer Masse (die ein Kippmoment erzeugt) als auch einer Detektionseinrichtung, hier eines Lesekopfes des Winkelencoders, im Drehtisch-Stator-Koordinatensystem, bezogen auf einen Nullpunkt des Koordinatensystems, abbilden. Dadurch, dass ein linearer Zusammenhang zwischen Kippmoment und Amplitude gegeben ist, wie in Fig. 2 gezeigt, kann das Kippmoment M mit einem Skalierungsfaktor c der Cosinusfunktion vorangestellt werden. Der lineare Zusammenhang ist in diesem Beispiel gegeben, muss aber bei anderen Drehtischen nicht vorliegen. Ein Kippmomenteinfluss auf ein Winkelmesssystem mit Eigenlagerung wurde untersucht und konnte gezeigt werden. Der Kippmomenteinfluss bzw. der verursachte Fehler ist um eine Größenordnung geringer als bei dem System ohne Eigenlagerung, wie oben untersucht, und nicht linear. In diesem Fall kann der Kippmomenteinfluss auf die Amplitude durch ein Polynom beschrieben werden.

Beim Umlauf der Maßverkörperung des Winkelencoders, beispielsweise einer Strichscheibe, die entlang einer Detektionseinrichtung (hier einem Lesekopf) geführt wird, erhält man die oben dargestellte Cosinusfunktion. In der Fig. 1 sind alle Positionsfehlerkurven bei der Drehtischposition 0 auf den Positionsfehler 0 gesetzt, was eine willkürliche Festlegung ist und in diesem Fall dem Zweck des Vergleichs dient.

Fig. 2 zeigt die Amplitude der Grundwelle der Auslenkung des Rotors bzw. der Verschiebung des Winkelmesssystems relativ zum Lesekopf in Abhängigkeit des aufgebrachten Kippmoments. Die Amplitude der Grundwelle aus Fig. 2 ist auch aus der Fig. 1 ermittelbar, wenn man das Maximum der dort gezeigten Kurven halbiert. Außer den Amplituden der Messungen aus Fig. 1 sind noch Amplituden weiterer Messungen in der Auftragung der Fig. 2 enthalten. Die Auswertung ergibt einen sehr gut linearen Zusammenhang zwischen Kippmoment und Amplitude der Grundwelle des Positionsfehlers.

Die Fehlermessungen der Fig. 1, mit Kippmomentbelastung, sind schon um den Fehler des Drehtisches ohne Belastung (siehe vorne Punkt 2.1, CAA-Datenaufnahme ohne Kippmoment) korrigiert, d.h. dieser Fehler ist bereits herausgerechnet. In Fig. 1 sind somit nur die vom Kippmoment zusätzlich verursachten Fehler gezeigt.

3. Aufbau einer Drehvorrichtung mit einer Maßverkörperung und einer Detektionseinrichtung

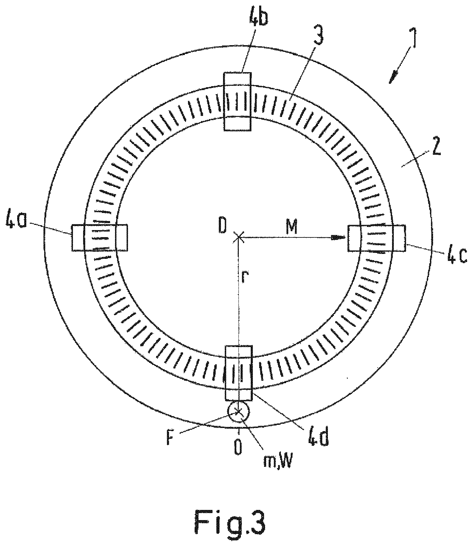

Fig. 3 zeigt die Drehvorrichtung 1 mit dem Rotor 2, hier als Drehtisch mit dem Rotor in Form eines Drehtellers 2. Auf dem Drehteller 2 ist bei der Drehposition Null im Stator-Koordinatensystem die Masse m aufgelegt. pM in der obigen Formel wäre in diesem Fall Null. Die Masse m ist im Abstand r (Abstand Masseschwerpunkt) zur der Drehachse D positioniert. Die Drehachse D steht senkrecht zur Zeichnungsebene.

DDie Sicht des Betrachters fällt von oben auf die Drehvorrichtung 1. Auf die Masse m

Die Sicht des Betrachters fällt von oben auf die Drehvorrichtung 1. Auf die Masse m wirkt eine Gewichtskraft F=m*g, die in Blickrichtung des Betrachters in die Zeichnungsebene hinein, nach unten, wirkt. Es resultiert das hier senkrecht zur Drehachse D wirkende Kippmoment M als Produkt M = rF.

Ferner ist in Fig. 3 die Maßverkörperung 3 in Form einer Strichscheibe und die Detektionseinrichtungen 4a, 4b, 4c und 4d (im Beispiel auch bezeichnet als Detektor oder Lesekopf) abgebildet.

Die Detektionseinrichtungen 4a, 4b, 4c und 4d sind jeweils um 90° zueinander versetzt. Es sind zwei Paare Detektionseinrichtungen 4a/4c und 4b/4d gebildet, wobei in einem Paar die Detektionseinrichtungen gegenüber liegen, also um 180° zueinander versetzt sind.

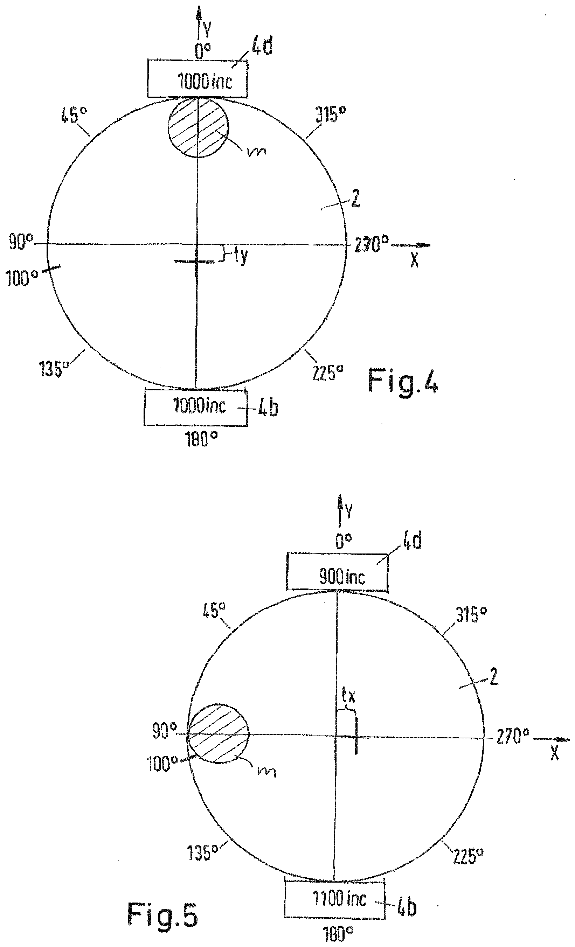

pRH in der obigen Formel beträgt in diesem Aufbau bei dem Lesekopf 4a -90° bzw. -π/2, relativ zur Nullposition im Stator-Koordinatensystem. Die Maßverkörperung 3 ist gemeinsam mit dem Drehteller/Rotor 2 gelagert und wird mit diesem gemeinsam verkippt. Eine Auslenkung durch die Gewichtskraft der Masse m auf den Rotor wirkt sich am Ort des Detektors 4a und 4c als Translation der Maßverkörperung 3 relativ zum Detektor 4a und 4c aus, woraus ein Positionsfehler resultiert. Bei den Detektionseinrichtungen 4b und 4d wird in der gezeigten Lage der Masse keine Translation der Maßverkörperung 3 relativ zum Detektor 4b und 4d detektiert, was sich aber je nach Lage der Masse ändert (siehe Erläuterung zu Fig. 4 und 5). Wenn der Phasenwinkel der Masse wie hier gezeigt bei Null im Stator Koordinatensystem ist oder wenn der Phasenwinkel 180° (π) beträgt (Masse m bei 12 Uhr) wird die Maßverkörperung 3 relativ zu den Detektoren 4a und 4c am meisten ausgelenkt und der Positionsfehler wird hier maximal, wobei bei 180° der Fehler das bei beiden Detektoren 4a und 4c jeweils das entgegengesetzte Vorzeichen annimmt, da die Maßverkörperung relativ zum Detektor genau entgegengesetzt ausgelenkt wird (in der gezeigten Ansicht nach oben statt nach unten wie bei Phasenwinkel Null). Durch die sich in dieser Konfiguration von gesetztem Nullpunkt und Detektorposition ergebenden Maxima bei Null => π => 2π lässt sich der Positionsfehler vorteilhaft mit der oben gezeigten Cosinusfunktion beschreiben.

In einem Verfahren zur Ermittlung einer Zuordnung zwischen einem Moment M, das quer, insbesondere senkrecht, zu einer Drehachse D der Drehvorrichtung 1 ist kann die Masse eine Prüfmasse sein. In einem Verfahren zum Betrieb eines KMG kann die Masse m die Masse eines Werkstücks W sein.

4. Ermittlung eines Zusammenhangs zwischen Kippmoment und Auslenkung; Ermittlung eines Kippmoments aus dem Zusammenhang

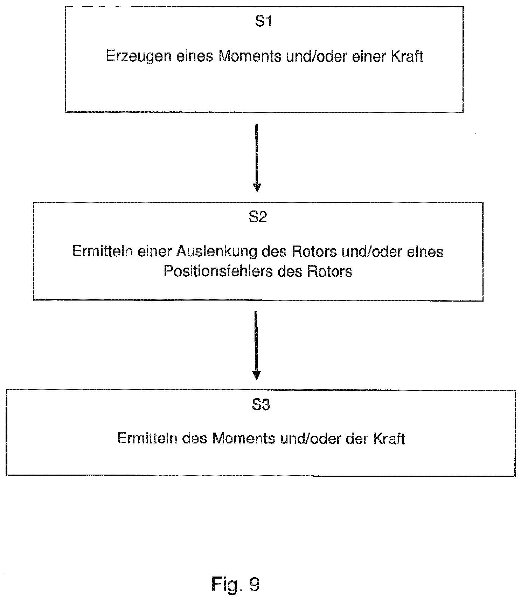

Zunächst ist in Fig. 9 ein Verfahrensablauf eines Verfahrens zur Ermittlung eines Moments und/oder einer Kraft, das/die auf eine Drehvorrichtung einwirkt und das/die quer zu einer Drehachse eines Rotors der Drehvorrichtung ist, aufgezeigt. Schritt S1 ist das Erzeugen eines Moments und/oder einer Kraft, das/die auf die Drehvorrichtung einwirkt und das/die quer zu der Drehachse des Rotors der Drehvorrichtung ist. Schritt S2 ist das Ermitteln einer Auslenkung des Rotors und/oder eines Positionsfehlers des Rotors bei einer Drehposition des Rotors. Schritt S3 ist das Ermitteln des Moments und/oder des Kraft bei der zumindest einen Drehposition des Rotors, unter Verwendung eines für die Drehvorrichtung bekannten oder ermittelten Zusammenhangs zwischen Moment und/oder Kraft, und Auslenkung und/oder Positionsfehler.

Die Amplitude der vom Kippmoment erzeugten Grundwelle kann wie folgt ermittelt werden:

Annahme: das Messsystem (Maßstab) ist ideal fehlerfrei. Dies kann z.B. durch eine Kalibrierung des Drehpositionsmesssystems mit rechnerischer Korrektur erreicht werden. Alternativ kann die Amplitude der Grundwelle durch ein oder mehrere bekannte Kippmomente für jede Winkelstellung erfasst und rechnerisch korrigiert werden. Dies entspricht dem Vorgehen von Fig. 1, wobei für die Datenaufnahme die Kippmomente aus unterschiedlichen Richtungen eingeleitet werden müssen. Es ergibt sich ein gegebenenfalls drehwinkelabhängiger Skalierungsfaktor c, mit dem von der Amplitude des Exzenterfehlers auf das aktuelle Kippmoment umgerechnet werden kann. Die Drehwinkelabhängigkeit des Skalierungsfaktors ist wie folgt bedingt:

Die Nachgiebigkeit gegenüber einem Kippmoment hängt ggf. von der Drehposition des Rotors ab. c ist also nicht zwingend konstant über den kompletten betrachteten Bewegungsbereich. Dies trifft häufig bei Drehtischen zu, die intern eine Dreipunktlagerung haben. Diese ist meist ungleichmäßig nachgiebig.

Die Erläuterungen zu den Fig. 4 und 5 betreffen das Erzeugen eines Moments durch eine Masse und die Ermittlung einer Auslenkung des Rotors gemäß Schritt S1 und S2 des Verfahrensablaufes aus Fig. 9. Es werden in Fig. 4 und 5 im Vergleich zu Fig. 3 nur zwei der insgesamt vier Detektionseinrichtungen betrachtet und der Aufbau ist schematischer dargestellt. Es wird in Fig. 4 und 5 das Paar Detektionseinrichtungen 4b, 4d betrachtet, wobei der Aufbau um 180° verdreht ist (4d in Fig. 3 unten, in Fig. 4 und 5 oben, bei 0° auf der Winkelskala des Stators). Die Ausführungen gelten in analoger Weise für ein weiteres Paar von Detektionseinrichtungen 4a, 4c, das gegenüber dem Paar 4b, 4d um 90° versetzt ist, selbstverständlich bei entsprechend angepasster Wahl der Rotorstellung und Phasenlage der Masse.

Die Leseköpfe 4b, 4d von Winkelmesssystemen werden im folgenden Beispiel als Zähler angesehen. Es sind in den Fig. 4 und 5 ausgewählte Winkelwerte der Winkelskala des Stators des Drehtisches gezeigt. Es wird angenommen, der Rotor 2 des Drehtisches steht auf 100° auf dieser Winkelskala. Die Nullmarke des Rotors 2 ist mit einem fetten Strich bei 100° gezeigt. Im unbelasteten Fall würden beide Leseköpfe 4b, 4d z.B. 1000 Inkremente (inc) anzeigen.

Wird, wie in Fig. 4 gezeigt, eine Gewichtskraft durch die Masse m durch eine unter 0° orientierte, exzentrische Werkstückmasse eingeleitet, entsteht ein Kippmoment um die X-Achse. Der Rotor 2 verkippt und in der Ebene des Winkelmesssystems wirkt sich diese Verkippung als Auslenkung bzw. Translation ty in Y-Richtung aus. In dem in Fig. 4 gezeigten Fall erfolgt die Verschiebung des Maßstabs in eine nicht sensitive Richtung der Leseköpfe 4b, 4d. Die Verschiebung wird also von den Leseköpfen 4b, 4d nicht registriert, beide Leseköpfe zeigen weiterhin 1000 Inkremente (inc) als Positionswert an.

In Fig. 5 befindet sich der Rotor 2 des Drehtisches immer noch auf der 100°-Position. Die Gewichtskräfte durch die Masse m werden jetzt aus der 90°-Richtung eingeleitet. Dadurch entsteht ein Kippmoment um die Y-Achse. Der Rotor verkippt und in der Ebene des Winkelmesssystems wirkt sich diese Verkippung als Translation tx in X-Richtung aus. In Fig. 5 erfolgt die Verschiebung des Maßstabes in die sensitive Richtung der Leseköpfe 4b, 4d. Die in Fig. 4 und Fig. 5 betragsmäßig identische Verschiebung, tx entspricht im Betrag ty, wird also von den Leseköpfen 4b, 4d voll registriert. Dabei zählen die Leseköpfe 4b, 4d aufgrund der gegenüberliegenden Anordnung in entgegengesetzte Richtung, sodass beispielsweise der eine Lesekopf 4d 900 Inkremente (inc) und der andere Lesekopf 4b 1100 Inkremente (inc) anzeigt.

Die Aufbauten der Fig. 4 und 5 weisen eine Maßverkörperung analog zum Aufbau der Fig. 3 auf, wobei die Maßverkörperung durch die Detektionseinrichtungen 4b, 4d in den Fig. 4 und 5 abgetastet werden.

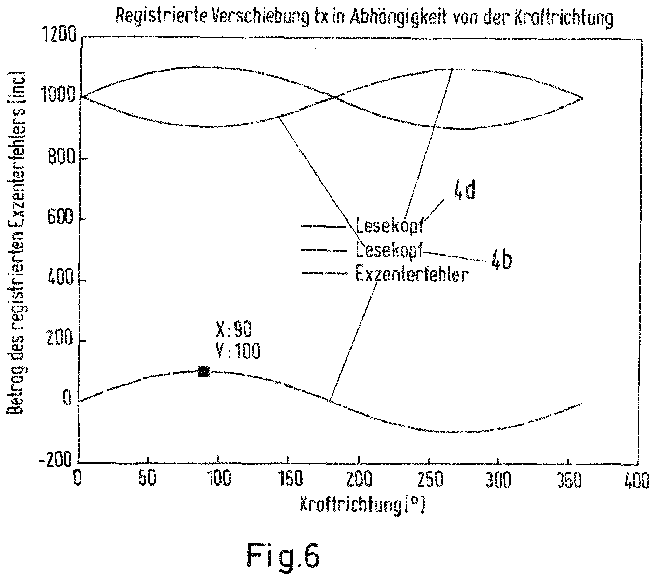

Fig. 6 zeigt oben die Beträge der Auslenkung des Rotors 2, gemessen in Inkrementen der Maßverkörperungen für die Detektionseinrichtungen 4b, 4d in Abhängigkeit von der Richtung (Winkel) der eingeleiteten Kraft.

Die untere Kurve in Fig. 6 zeigt die resultierende Auslenkung nach Verrechnung der Werte. Am Beispiel des Wertes bei 90° aus Fig. 5 erhält man einen Wert von 900 Inkrementen an Detektionseinrichtung 4d und 1100 Inkrementen an Detektionseinrichtung 4b, sodass die resultierende Auslenkung an jeder Detektionseinrichtung zu 100 ermittelt wird.

Betrag und Richtung des Moments:

Bei einer isolierten Betrachtung von zwei paarweise gegenüber liegenden Leseköpfen kann der vektorielle Anteil des Kippmoments in einer Raumrichtung und dessen Vorzeichen wie folgt berechnet werden: $M = c*(x2-x1)/2$.

Dabei ist c ein Skalierungsfaktor zwischen Amplitude des Exzenterfehlers und x1 und x2 sind die Zählerstände der beiden Leseköpfe 4b, 4d.

| Kraft aus Richtung: | Moment um | Richtung des Moments | Richtung und Vorzeichen der Verschiebung |
|---|---|---|---|
| 0° | X | - | -ty |
| 90° | Y | - | +tx |
| 180° | X | + | +ty |
| 270° | Y | + | -tx |
| *Mit 2 Leseköpfen kann nur der vektorielle Anteil der Verschiebung in einer Raumrichtung, also von tx oder ty, bestimmt werden. Die Leseköpfe müssen nicht in einer Hauptrichtung orientiert sein und auch nicht genau gegenüberliegen. Es muss jedenfalls der Winkel zwischen den Leseköpfen bekannt sein. | | | |

Ausgehend von den vorangehend beschriebenen Betrachtung von zwei Leseköpfen kommen in der vorliegenden Erfindung zumindest drei Leseköpfe zum Einsatz, statt nur einer oder zwei.

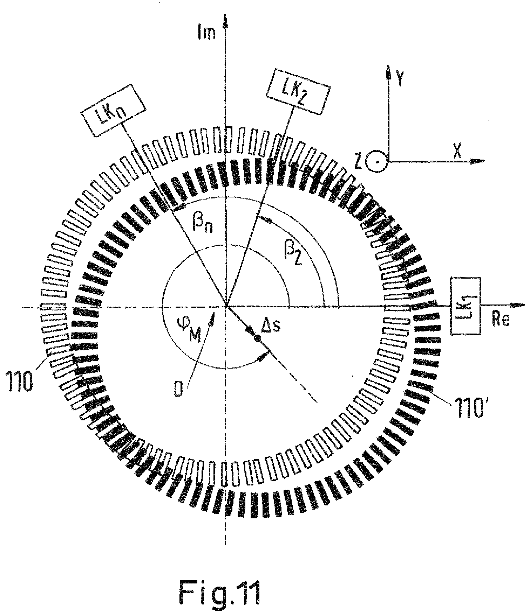

Eine Variante mit vier Leseköpfen 4a-d ist in Fig. 3 gezeigt und nachfolgend beschrieben. Eine Variante mit drei Leseköpfen ist in Fig. 11 gezeigt und am Ende dieses Beispielteils beschrieben.

Kommen vier regelmäßig angeordnete, d.h. um 90° zueinander versetzte, Leseköpfe zum Einsatz, kann der Betrag des resultierenden Gesamtmoments mit

$$Mv=sqrt(Mx^2+My^2)$$

berechnet werden. Es ist keine Drehbewegung erforderlich. Das Kippmoment kann in jeder Position unmittelbar berechnet werden. Es genügt also die Betrachtung einer Drehposition und eine Einstellung einer weiteren Drehposition, durch Drehung des Rotors ist nicht erforderlich. Diese Berechnung des Moments entspricht Schritt S3 des Verfahrensablaufs aus Fig. 9.

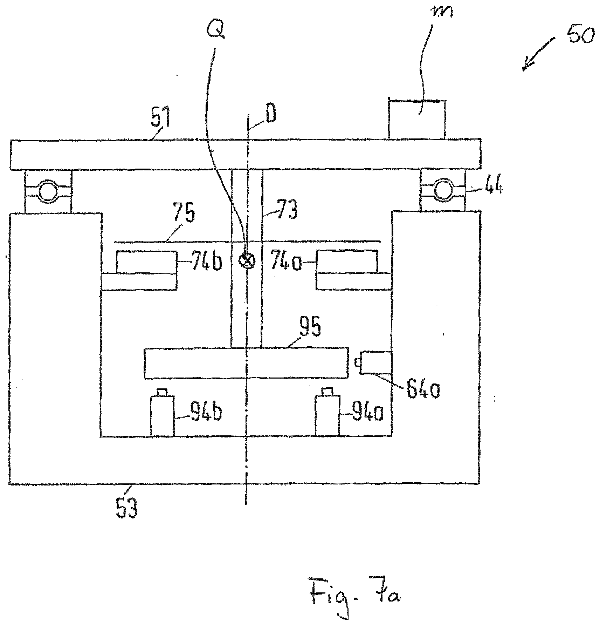

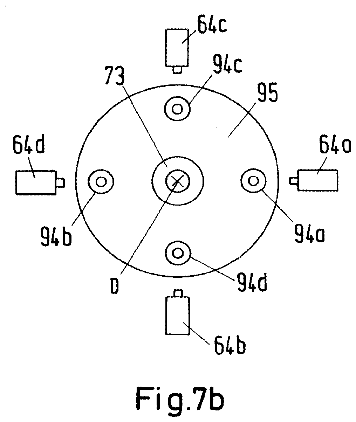

Fig. 7 zeigt eine Drehvorrichtung, bei der statt Winkelsensoren bzw. Leseköpfen, die auf eine Maßverkörperung hin orientiert sind, ein Messkörper 95 und Abstandssensoren 64a, 94a, 94b verwendet werden, die einen Abstand zum Messkörper 95 erfassen.

Fig. 7a zeigt eine Kombination von zwei verschiedenen Messsystemen bzw. Teil-Messsystemen in einer Drehvorrichtung. Die Drehvorrichtung 50 weist einen Stator 53, eine Drehlagerung 44 und einen Rotor 51 auf.

An dem Rotor ist über einen nach unten abragenden stabförmigen Träger 73 Messkörper 95 angebracht, der ein Messkörper im Sinne der vorliegenden Erfindung ist.

Dieser Messkörper 95 weist eine zylinderförmige Scheibe auf, auf deren in Umfangsrichtung verlaufenden Außenrand ein erster Sensor 64a zur Ermittlung der radialen Relativposition zwischen der Zylinderscheibe 95 und dem Stator 53 ausgerichtet ist. Ferner sind zwei in axialer Richtung, d.h. parallel zur Richtung der Drehachse D, auf eine ebene Oberfläche der Zylinderscheibe 95 ausgerichtete Sensoren 94a, 94b mit dem Stator 53 verbunden.

Bei Aufbringen einer Masse m, beispielsweise eines Werkstücks, die mit dem Schwerpunkt exzentrisch zur Drehachse D ist, wird ein Kippmoment auf den Rotor 51 erzeugt. Wenn der Schwerpunkt der Masse m beispielsweise in der Ebene der Zeichnung liegt, erfolgt eine rotatorische Auslenkung des Rotors 51 und des Messkörpers 95 um eine Rotationsachse, die quer zur Drehachse D des Rotors ist, in diesem Beispiel um die senkrecht zur Zeichnungsebene stehende Achse Q. Diese Auslenkung entspricht einer Verkippung des Messkörpers 95 um die Achse Q.

Durch die Verkippung wird der Abstand zwischen Sensor 94b und Messkörper 95 verringert. Der Abstand zwischen Sensor 94a und Messkörper 95, sowie der Abstand zwischen Sensor 64a und Messkörper 95 werden vergrößert.

Es können mehr Abstandssensoren vorhanden sein, als die beispielhaft gezeigten drei Sensoren 64a, 94a, 94b. Fig. 7b zeigt einen Blick von unten entlang der Drehachse D auf den Messkörper 95. Gezeigt sind entlang des Außenumfangs des Messkörpers 95 weitere radial ausgerichtete Sensoren 64b, 64c, 64d, und weitere axiale Sensoren 94c und 94d.

In der Drehvorrichtung 50 aus Fig. 7a ist ferner ein Drehpositionsmessystem mit der Maßverkörperung 75, in Form einer Strichscheibe und den Winkelsensoren 74a und 74b gezeigt. Dieses Drehpositionsmessystem wird hier nicht für das erfindungsgemäße Verfahren zum Ermitteln der Auslenkung des Rotors 51 verwendet, wie dies beispielsweise mit einem Aufbau nach Fig. 3 oder Fig. 11 geschieht. In diesem Fall werden nur zwei Winkelsensoren 74a und 74b eingesetzt. Es wäre aber möglich, einen dritten oder auch vierten Winkelsensor vorzusehen, um auch das Drehpositionsmesssystem zur Ermittlung einer Auslenkung des Rotors zu verwenden, wobei in diesem Fall redundante Systeme vorlägen, da auch ein Messkörper 95 und Abstandssensoren 64 und 94 vorgesehen sind.

5. Ermittlung des Phasenwinkels des Schwerpunkts einer Masse auf dem Rotor

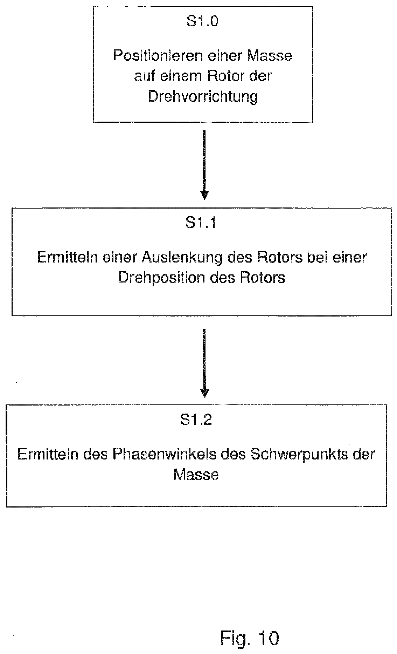

Zunächst ist in Fig. 10 der Ablauf eines Verfahrens zur Ermittlung des Phasenwinkels des Schwerpunkts einer Masse auf einem Rotor einer Drehvorrichtung in einem Koordinatensystem eines Stators der Drehvorrichtung und/oder in einem Koordinatensystem des Rotors gezeigt. Schritt S1.0 ist das Positionieren einer Masse auf einem Rotor der Drehvorrichtung. Schritt S1.1 ist das Ermitteln einer Auslenkung des Rotors bei zumindest einer Drehposition des Rotors, mit einem Drehpositionsmesssystem der Drehvorrichtung, das eine Maßverkörperung und eine Detektionseinrichtung aufweist. Es wird hierbei aus der relativen Position von Detektionseinrichtung und Maßverkörperung und/oder aus der Änderung der relativen Position von Detektionseinrichtung und Maßverkörperung die Auslenkung des Rotors ermittelt. Schritt S1.1 wurde bereits zuvor anhand des Schrittes S2 aus Fig. 9 erläutert (siehe dazu oben Punkt 4). Schritt S1.2 ist das Ermitteln des Phasenwinkels des Schwerpunkts der Masse in einem Koordinatensystem eines Stators der Drehvorrichtung und/oder in einem Koordinatensystem des Rotors aus der Auslenkung des Rotors.

Nachfolgend werden spezielle Ausführungsvarianten beschrieben.

Kommen vier Leseköpfe zum Einsatz, kann die Phase des Moments, in Schritt S1.2 des gezeigten Verfahrensablaufes, aus den Einzelmomenten mit

$$P=atan2(-Mx/My)*180/pi$$

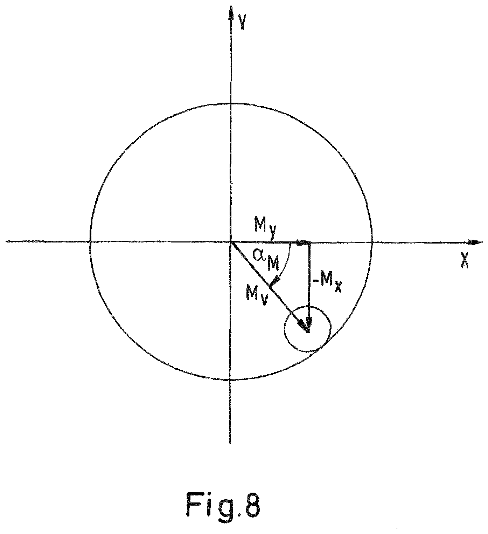

Berechnet werden. Dabei muss das Vorzeichen des in Y-Richtung wirkenden Moments (= das Moment um die X-Achse) gedreht werden, um vom Moment auf die Schwerpunktlage zu kommen (siehe Fig. 8).

Soll die Schwerpunktlage im Rotorkoordinatensystem angegeben werden, muss die Phase p noch mit dem Drehwinkel verrechnet werden.

Das Nachfolgende Beispiel zeigt die Berechnung der Translation eines fehlerfreien Drehwinkelmesssystems anhand dreier Leseköpfe

Figur 11 zeigt den Aufbau für dieses Beispiel. Es werden mehrere Leseköpfe $LK_1$, $LK_2$, $LK_n$, allerdings zumindest die drei gezeigten, um eine fehlerfreie bzw. bereits kalibrierte Maßverkörperung 110 auf den Winkeln $\beta 1 ...\beta m$ bezogen auf das globale Koordinatensystem angeordnet. Die Maßverkörperung 110 ist mit dem nicht gezeigten Rotor einer Drehvorrichtung gekoppelt und ortsfest, also relativ unbeweglich zu dem Rotor. Die vorgesehene Drehachse D des Rotors und damit der Maßverkörperung 110 steht senkrecht zur Zeichnungsebene und durchdringt die Zeichnungsebene dort, wo der von dem Bezugszeichen D ausgehende Pfeil es anzeigt. Die Maßverkörperung 110 wird durch Auslenkung des Rotors ebenfalls ausgelenkt, nämlich in die Position 110'. Bei der Auslenkung wird die Maßverkörperung und der Rotor um eine Achse rotiert, die parallel zur Zeichnungsebene (nicht in der Zeichnungsebene) und quer zu D verläuft.

Die Auslenkung, die an sich eine rotatorische Bewegung ist, wird an den Leseköpfen $LK_1$, $LK_2$, $LK_n$ als Translation detektiert. So wie auch der Betrachter der Fig. 11 die Bewegung der Maßverkörperung 110 in die Position 110' in der zweidimensionalen Zeichnungsebene als Translation sieht. Diese detektierte Translation der Maßverkörperung 110 in die Position 110' wird durch den Betrag $\Delta s$ und den Winkel $\varphi_M$ bezogen auf das globale Koordinatensystem beschrieben, das rechts oben in Fig. 11 eingezeichnet ist.

In der komplexen Ebene, dargestellt in Fig. 11 durch die Realachse (Re) und die Imaginärachse (Im) kann die Bewegung der Maßverkörperung durch

$$M(\varphi) = \Delta s(\varphi) \cdot e^{(j \cdot \varphi_M(\varphi))} \qquad (1)$$

in Abhängigkeit des Drehwinkels $\varphi$ der Maßverkörperung beschrieben werden. Die Winkelpositionen der Leseköpfe in der komplexen Ebene lassen sich durch den Zusammenhang

$$E_n = e^{(j \cdot \beta_n)} \qquad (2)$$

ausdrücken. Die Bewegung $\Delta s$ der Maßverkörperung resultiert für jeden Lesekopf in einem anderen tangentialen Translationsanteil. Dieser lässt sich durch

$$\Delta s_{t,n}(\varphi) = \Im\left(\frac{M}{E_n}\right) = \Im\left(\Delta s(\varphi) \cdot \frac{e^{(j \cdot \varphi_M(\varphi))}}{e^{(j \cdot \beta_n)}}\right) = \Im\left(\Delta s \cdot e^{(j \cdot (\varphi_M(\varphi) - \beta_n))}\right)$$
$$= \cdots \qquad (3)$$
$$= \Delta s \cdot sin\left(\varphi_M(\varphi) - \beta_n\right)$$

für jeden Lesekopf berechnen. Die durch diese Translation resultierende Falschzählung der Leseköpfe ergibt sich dadurch dann zu

$$\gamma_n(\varphi) = arctan\left(\frac{\Delta s_{t,n}(\varphi)}{R}\right), \qquad (4)$$

wobei R der Abstand des Messpunktes des Lesekopfes von der idealen Drehachse der Maßverkörperung darstellt. Da für sehr kleine Winkel arctan(x) ≈ x gilt, kann vorige Gleichung zu

$$\gamma_n(\varphi) = \frac{\Delta s_{t,n}(\varphi)}{R} = \frac{\Delta s(\varphi) \cdot sin\left(\varphi_M(\varphi) - \beta_n\right)}{R} \tag{5}$$

umgeschrieben werden.

Wenn alle m verbauten Leseköpfe auf dieselbe Referenzmarke des kalibrierten bzw. teilungsfehlerfreien Maßstabes referenziert wurden, so setzt sich die vom n-ten Lesekopf dargestellte Winkelposition $\tilde{\varphi}_n$ aus der tatsächlichen Winkeldrehung $\varphi$ der Maßverkörperung, den Montagewinkel $\beta n$ des Lesekopfes und der durch die Translation verursachte Falschzählung $\gamma_n$ zusammen:

$$\tilde{\varphi}_n = \varphi + \beta_n + \gamma_n \tag{6}$$

Die Winkeldifferenz $\Delta\tilde{\varphi}_{k,l}(\varphi)$, die zwischen dem k-ten und l-ten Lesekopf gemessen werden kann, lässt sich durch

$$\Delta\tilde{\varphi}_{k,l}(\varphi) = \tilde{\varphi}_k - \tilde{\varphi}_l = \varphi - \varphi + \beta_k - \beta_l + \gamma_k(\varphi) - \gamma_l(\varphi) \\ \text{für} \quad k \neq l \tag{7}$$

berechnen. Da die Winkelpositionen $\beta_1...\beta_m$ bekannt sind, sind auch deren Differenzen $\beta_k - \beta_l$ bekannt. Die gemessene Winkeldifferenz $\Delta\tilde{\varphi}_{k,l}(\varphi)$ lässt sich somit in eine Offsetkorrigierte Winkeldifferenz $\Delta\varphi_{k,l}(\varphi)$ zu

$$\Delta\varphi_{k,l}(\varphi) = \Delta\tilde{\varphi}_{k,l}(\varphi) - (\beta_k - \beta_l) = \gamma_k(\varphi) - \gamma_l(\varphi) \\ \text{für} \quad k \neq l \tag{8}$$

umschreiben.

Ersetzt man nun in Gleichung (8) $\gamma_k$ und $\gamma_l$ durch die Werte aus Gleichung (5) so ergeben sich die Offsetkorrigierten Winkeldifferenzen $\Delta\varphi_{k,l}$ zu

$$\Delta\varphi_{k,l}(\varphi) = \frac{\Delta s(\varphi) \cdot sin\left(\varphi_M(\varphi) - \beta_k\right)}{R} - \frac{\Delta s(\varphi) \cdot sin\left(\varphi_M(\varphi) - \beta_l\right)}{R} \\ = \frac{\Delta s(\varphi)}{R} \cdot \left(sin\left(\varphi_M(\varphi) - \beta_k\right) - sin\left(\varphi_M(\varphi) - \beta_l\right)\right) \tag{9}$$

Über die Additionstheoreme sin(x ± y) = sin x cos y ± sin y cos x der trigonometrischen Funktionen ergibt sich Gleichung (9) zu

$$\Delta\varphi_{k,l}(\varphi) = \frac{\Delta s(\varphi)}{R} \cdot \Big( \overbrace{\sin(\varphi_M(\varphi)) \cdot \cos(\beta_k) - \sin(\beta_k) \cdot \cos(\varphi_M(\varphi))}^{\sin(\varphi_M(\varphi) - \beta_k)} \cdots \\ \overbrace{- \sin(\varphi_M(\varphi)) \cdot \cos(\beta_l) + \sin(\beta_l) \cdot \cos(\varphi_M(\varphi))}^{-\sin(\varphi_M(\varphi) - \beta_l)} \Big) \\ = \frac{\Delta s(\varphi)}{R} \cdot \left(\sin(\varphi_M(\varphi)) \cdot \cos\left(\beta_k - \cos\beta_l\right) + \cos(\varphi_M(\varphi)) \cdot \sin(\beta_l - \sin\beta_k)\right) \tag{10}$$

Gleichung (10) besteht im Endeffekt lediglich aus zwei Unbekannten: $\Delta s(\varphi)$ und $\varphi_M(\varphi)$. $\Delta\varphi_{k,l}(\varphi)$ ist durch die Messung bekannt (Differenzmessung der Lesekopfsignale) und $\beta_1...\beta_m$ sind durch Mittelwertsbildung (siehe Geckeler-Formel (7)) bekannt. Aus Gleichung (10) ist auch ersichtlich, dass die Translation unter der Verwendung von nur zwei Leseköpfen nicht eindeutig zu berechnen ist. Sind allerdings m ≥ 3 Leseköpfe an der Maßverkörperung verbaut, so ergeben sich

$$\sum_{i=1}^{m-1} m$$

mögliche Differenzbildungen nach Gleichungen (7) und (8) und somit auch entsprechend viele verschiedene Gleichungen nach Formel (10). Das Gleichungssystem ist somit für jeden Drehwinkel φ eindeutig lösbar.

Berechnungsbeispiel

Nachfolgend soll anhand eines Beispiels die Translationsrückrechnung für einen bestimmten Drehwinkel φ gezeigt werden.

Gegeben:

- Translation: $\varphi M$= 45°, $\Delta s$ = 0.00001 $m$
- drei Leseköpfe: $\beta_1$ = 0°, $\beta_2$ = 74° und $\beta 3$ = 132.85°
- R = 0.075m

Gemessene Winkeldifferenzen

- $\Delta\varphi_{2,1}$ = -1.5892 · $10^{-4}$
- $\Delta\varphi_{3,1}$ = -2.2752 · $10^{-4}$
- $\Delta\varphi_{3,2}$ = -6.859 · $10^{-5}$

Errechnete Differenzen der Winkelwerte:

- $K2,1 \cos \beta2$ -$\cos \beta1$ = -0.724
- $K3,1$ := $\cos \beta3$ -$\cos \beta1$ = -1.6801
- $K3,2$ := $\cos \beta3$ -$\cos \beta2$ = -0.9552
- $S2,1$ := $\sin \beta1$ -$\sin \beta2$ = -0.9613
- $S3,1$ := $\sin \beta1$ -$\sin \beta3$ = -0.7331
- $S3,2$ := $\sin \beta2$ -$\sin \beta3$ = 0.2281

zunächst wird Gleichung (10) für k = 2 und l = 1 bzw. k = 3 und l = 1 nach $\Delta$s umgeformt und gleich gesetzt:

$$\frac{\Delta\varphi_{2,1} \cdot R}{\sin(\varphi_{M,rueck}) \cdot K_{2,1} + cos(\varphi_{M,rueck}) \cdot S_{2,1}} = \frac{\Delta\varphi_{3,1} \cdot R}{\sin(\varphi_{M,rueck}) \cdot K_{3,1} + cos(\varphi_{M,rueck}) \cdot S_{3,1}}$$

$$\Delta\varphi_{2,1} \cdot (\sin(\varphi_{M,rueck}) \cdot K_{3,1} + cos(\varphi_{M,rueck}) \cdot S_{3,1}) = \Delta\varphi_{3,1} \cdot (\sin(\varphi_{M,rueck}) \cdot K_{2,1} + cos(\varphi_{M,rueck}) \cdot S_{2,1})$$

$$\Delta\varphi_{2,1} \cdot \sin(\varphi_{M,rueck}) \cdot K_{3,1} + \Delta\varphi_{2,1} \cdot cos(\varphi_{M,rueck}) \cdot S_{3,1} = \Delta\varphi_{3,1} \cdot \sin(\varphi_{M,rueck}) \cdot K_{2,1} + \Delta\varphi_{3,1} \cdot cos(\varphi_{M,rueck}) \cdot S_{2,1}$$

$$\sin(\varphi_{M,rueck}) \cdot (\Delta\varphi_{2,1} \cdot K_{3,1} - \Delta\varphi_{3,1} \cdot K_{2,1}) = cos(\varphi_{M,rueck}) \cdot (\Delta\varphi_{3,1} \cdot S_{2,1} - \Delta\varphi_{2,1} \cdot S_{3,1})$$

$$\frac{\sin(\varphi_{M,rueck})}{\cos(\varphi_{M,rueck})} = \tan(\varphi_{M,rueck}) = \frac{\Delta\varphi_{3,1} \cdot S_{2,1} - \Delta\varphi_{2,1} \cdot S_{3,1}}{\Delta\varphi_{2,1} \cdot K_{3,1} - \Delta\varphi_{3,1} \cdot K_{2,1}}$$

$$\Rightarrow \quad \varphi_{M,rueck} = \arctan\left(\frac{\Delta\varphi_{3,1} \cdot S_{2,1} - \Delta\varphi_{2,1} \cdot S_{3,1}}{\Delta\varphi_{2,1} \cdot K_{3,1} - \Delta\varphi_{3,1} \cdot K_{2,1}}\right)$$

$$(11)$$

Die oben genannten Werte in Gleichung (11) eingesetzt:

$$\varphi_{M,rueck} = \arctan\left(\frac{(-2.2752 \cdot 10^{-4} \cdot -0.9613) - (1.5892 \cdot 10^{-4} \cdot -0.7331)}{(-1.5892 \cdot 10^{-4} \cdot -1.6801) - (2.2752 \cdot 10^{-4} \cdot -0.724)}\right) \quad (12)$$

$$\varphi_{M,rueck} = \arctan(1) = \frac{\pi}{4} \cong 45°$$

Der so gewonnene Winkel $\varphi_{M,rueck}$ kann dann in Gleichung (10) für wahlweise k = 2 und I = 1 oder k = 3 und I = 1 eingesetzt werden. Somit ergibt sich der Betrag der Translation Δs zu

$$\Delta s_{rueck} = \frac{\Delta\varphi_{3,1} \cdot R}{\sin(\varphi_{M,rueck}) \cdot K_{3,1} + cos(\varphi_{M,rueck}) \cdot S_{3,1}}$$

$$= \frac{-2.2752 \cdot 10^{-4} \cdot 0.075m}{\sin(\frac{\pi}{4}) \cdot -1.6801 + cos(\frac{\pi}{4}) \cdot -0.7331} \quad (13)$$

$$= 0.00001m$$

Es konnte die Translation in Betrag und Phase zurück gerechnet werden, das Ergebnis deckt sich mit den vorgegebenen Werten.

Je mehr Leseköpfe bei der Rückrechnung verwendet werden können, umso genauer sollte dann die Rechnung gegenüber Einflüssen wie Rauschen sein, da die Rückrechnung mit mehreren Formeln geschehen kann. Hier wurde lediglich von einem idealen Signal die Translation zurück gerechnet.

**Patentansprüche**

1.  Verfahren zur Ermittlung eines Moments und/oder einer Kraft, das/die auf eine Drehvorrichtung (1; 50) eines Koordinatenmessgeräts einwirkt und das/die quer zu einer Drehachse (D) eines Rotors (2; 51) der Drehvorrichtung ist, wobei die Drehvorrichtung ein Messsystem (3, 4a, 4b, 4c, 4d; 95, 64a, 94a, 94b; 110, LK$_1$, LK$_2$, LK$_n$) aufweist, welches aufweist:

    - einen Messkörper (3; 95; 110)
    - zumindest drei Detektionseinrichtungen (4a, 4b, 4c, 4d; 64a, 94a, 94b; LK$_1$, LK$_2$, LK$_n$) zur Detektion einer relativen Position der Detektionseinrichtungen (4a, 4b, 4c, 4d; 64a, 94a, 94b; LK$_1$, LK$_2$, LK$_n$) zu dem Messkörper (3; 95; 110) und/oder zur Detektion einer Änderung der relativen Position der Detektionseinrichtungen zu dem Messkörper,

    und wobei das Verfahren die folgenden Schritte aufweist

    - Erzeugen (S1) eines Moments (M) und/oder einer Kraft, das/die auf die Drehvorrichtung (1; 50) einwirkt und das/die quer zu der Drehachse (D) des Rotors (2; 51) der Drehvorrichtung (1; 50) ist, in einer eingestellten Drehposition, wobei das Moment und/oder die Kraft eine Auslenkung des Rotors bewirkt,
    - Ermitteln (S2) der Auslenkung des Rotors (2; 51) und/oder eines Positionsfehlers des Rotors in der einen eingestellten Drehposition des Rotors, aus der relativen Position der zumindest drei Detektionseinrichtungen (4a, 4b, 4c, 4d; 64a, 94a, 94b; LK$_1$, LK$_2$, LK$_n$) zu dem Messkörper (3; 95; 110),
    - Ermitteln (S3) eines Wertes des Moments und/oder der Kraft bei der einen eingestellten Drehposition des Rotors (2; 51), unter Verwendung eines für die Drehvorrichtung bekannten oder ermittelten Zusammenhangs, der eine Zuordnung oder ein funktionaler Zusammenhang ist, zwischen

    i) Moment (M) und/oder Kraft, und
    ii) Auslenkung und/oder Positionsfehler.

2.  Verfahren nach Anspruch 1, wobei vier Detektionseinrichtungen (4a, 4b, 4c, 4d) vorhanden sind.

3.  Verfahren nach Anspruch 2, wobei die Detektionseinrichtungen (4a, 4b, 4c, 4d) um 80 - 110° zueinander versetzt um die Drehachse (D) herum verteilt angeordnet sind.

4.  Verfahren nach einem der vorangehenden Ansprüche, wobei das Moment (M) erzeugt wird durch:

- Positionieren einer Masse (m), insbesondere eines Werkstücks (W), auf dem Rotor (2), wobei der Schwerpunkt der Masse exzentrisch zu der Drehachse (D) ist, und/oder
- Ausüben einer Kraft auf den Rotor (2) durch Berühren des Rotors (2) oder eines auf dem Rotor positionierten Werkstücks (W) mit einem Messsystem eines Koordinatenmessgeräts.

5. Verfahren nach einem der vorangehenden Ansprüche, wobei mit dem Verfahren eine Positionierung der Masse (m) ermittelt wird, bei der das Moment und/oder die Kraft minimal oder Null ist, wobei bei dem Verfahren das Positionieren der Masse (m) auf dem Rotor (2) derart erfolgt, dass die Auslenkung oder der ermittelte Positionsfehler minimal oder Null ist.

6. Verfahren nach einem der vorangehenden Ansprüche, aufweisend die Ausgabe einer Warnung und/oder Verhinderung einer Drehbewegung des Rotors (2), wenn ein vorgegebener Grenzwert des Moments (M) und/oder der Kraft erreicht oder überschritten wird.

7. Verfahren nach einem der vorangehenden Ansprüche, wobei die Drehvorrichtung (1; 50) in einem Koordinatenmessgerät angeordnet ist.

8. Verfahren nach einem der vorangehenden Ansprüche, wobei der Zusammenhang erhalten ist durch

    a) Erzeugen zumindest einen Moments und/oder zumindest einer Kraft, das/die quer zu der Drehachse des Rotors der Drehvorrichtung ist, bei zumindest einer Drehposition des Rotors,
    b) Ermitteln einer Auslenkung und/oder eines Positionsfehlers der Drehvorrichtung, welche(r) durch das zumindest eine Moment und/oder die zumindest eine Kraft, bei der zumindest einen Drehposition, verursacht ist,
    c) Ermitteln eines Zusammenhangs zwischen (i) Moment und/oder Kraft und (ii) Auslenkung und/oder Positionsfehler.

9. Verfahren nach einem der vorangehenden Ansprüche, aufweisend

    - Ermitteln eines Phasenwinkels des Schwerpunkts der Masse in einem Koordinatensystem eines Stators der Drehvorrichtung und/oder in einem Koordinatensystem des Rotors aus der Auslenkung des Rotors oder dem Positionsfehler des Rotors.

10. Verfahren nach Anspruch 9, aufweisend

    - Ermitteln einer Auslenkung des Rotors (2; 51) in eine erste Raumrichtung und einer Auslenkung des Rotors (2; 51) in eine zweite Raumrichtung, bei einer Drehposition des Rotors (2; 51),
    - Ermitteln des Phasenwinkels des Schwerpunkts der Masse (m) aus der Auslenkung in die erste Raumrichtung und der Auslenkung in die zweite Raumrichtung.

11. Verfahren zur Ermittlung des Phasenwinkels des Schwerpunkts einer Masse auf einem Rotor einer Drehvorrichtung in einem Koordinatensystem eines Stators der Drehvorrichtung und/oder in einem Koordinatensystem des Rotors (2; 51) wobei die Drehvorrichtung ein Messsystem (3, 4a, 4b, 4c,4d; 95, 64a, 94a, 94b; 110, $LK_1$, $LK_2$, $LK_n$) aufweist, welches aufweist:

    - einen Messkörper (3; 95; 110)
    - zumindest drei Detektionseinrichtungen (4a, 4b, 4c, 4d; 64a, 94a, 94b; $LK_1$, $LK_2$, $LK_n$) zur Detektion einer relativen Position der Detektionseinrichtungen (4a, 4b, 4c, 4d; 64a, 94a, 94b; $LK_1$, $LK_2$, $LK_n$) zu dem Messkörper (3; 95; 110) und/oder zur Detektion einer Änderung der relativen Position der Detektionseinrichtungen zu dem Messkörper,

und wobei das Verfahren folgende Schritte aufweist:

    - Positionieren (S 1.0) einer Masse (m) auf einem Rotor (2; 51) der Drehvorrichtung,
    - Ermitteln (S 1.1) einer Auslenkung des Rotors (2; 51) bei einer eingestellten Drehposition des Rotors (2; 51), aus der relativen Position der zumindest drei Detektionseinrichtungen (4a, 4b, 4c, 4d; 64a, 94a, 94b; $LK_1$, $LK_2$, $LK_n$) zu dem Messkörper (3; 95),
    - Ermitteln (S 1.2) des Phasenwinkels des Schwerpunkts der Masse (m) in der einen eingestellten Drehposition aus der Auslenkung des Rotors (2; 51).

**12.** Verfahren nach Anspruch 11, aufweisend:

- Ermitteln einer Auslenkung des Rotors (2) in eine erste Raumrichtung und einer Auslenkung des Rotors (2) in eine zweite Raumrichtung, bei einer Drehposition des Rotors (2),
- Ermitteln des Phasenwinkels des Schwerpunkts der Masse (m) aus der Auslenkung in die erste Raumrichtung und der Auslenkung in die zweite Raumrichtung.

**Claims**

**1.** Method for ascertaining a torque and/or a force, which acts on a rotary apparatus (1; 50) of a coordinate measuring machine and which is directed across an axis of rotation (D) of a rotor (2; 51) of the rotary apparatus, wherein the rotary apparatus comprises a measuring system (3, 4a, 4b, 4c, 4d; 95, 64a, 94a, 94b; 110, $LK_1$, $LK_2$, $LK_n$), the latter comprising:

- a measuring body (3; 95; 110),
- at least three detection devices (4a, 4b, 4c, 4d; 64a, 94a, 94b; $LK_1$, $LK_2$, $LK_n$) for detecting a relative position of the detection devices (4a, 4b, 4c, 4d; 64a, 94a, 94b; $LK_1$, $LK_2$, $LK_n$) in relation to the measuring body (3; 95; 110) and/or for detecting a change in the relative position of the detection devices in relation to the measuring body,

and wherein the method comprises the following steps:

- producing (S1) a torque (M) and/or a force, which acts on the rotary apparatus (1; 50) and which is directed across the axis of rotation (D) of the rotor (2; 51) of the rotary apparatus (1; 50), in a set rotational position, wherein the torque and/or the force brings about a deflection of the rotor,
- ascertaining (S2) the deflection of the rotor (2; 51) and/or a position error of the rotor in the one set rotational position of the rotor, from the relative position of the at least three detection devices (4a, 4b, 4c, 4d; 64a, 94a, 94b; $LK_1$, $LK_2$, $LK_n$) in relation to the measuring body (3; 95; 110),
- ascertaining (S3) a value of the torque and/or the force at the one set rotational position of the rotor (2; 51) using a relationship, which is known or ascertained for the rotary apparatus and which is an assignment or a functional relationship, between

i) torque (M) and/or force, and
ii) deflection and/or position error.

**2.** Method according to Claim 1, wherein four detection devices (4a, 4b, 4c, 4d) are present.

**3.** Method according to Claim 2, wherein the detection devices (4a, 4b, 4c, 4d) are arranged distributed about the axis of rotation (D), offset from one another by 80-110°.

**4.** Method according to any one of the preceding claims, wherein the torque (M) is produced by:

- positioning a mass (m), in particular a workpiece (W), on the rotor (2), wherein the center of gravity of the mass is eccentric in relation to the axis of rotation (D), and/or
- exerting a force on the rotor (2) by contacting the rotor (2) or a workpiece (W) positioned on the rotor with a measuring system of a coordinate measuring machine.

**5.** Method according to any one of the preceding claims, wherein the method is used to ascertain a positioning of the mass (m) in which the torque and/or the force is minimal or zero, wherein the mass (m) is positioned on the rotor (2) in the method in such a way that the deflection or the ascertained position error is minimal or zero.

**6.** Method according to any one of the preceding claims, comprising the output of a warning and/or the prevention of a rotational movement of the rotor (2) if a predetermined threshold of the torque (M) and/or of the force is reached or exceeded.

**7.** Method according to any one of the preceding claims, wherein the rotary apparatus (1; 50) is arranged in a coordinate measuring machine.

8. Method according to any one of the preceding claims, wherein the relationship is obtained by:

   a) producing at least one torque and/or at least one force, which is directed across the axis of rotation of the rotor of the rotary apparatus, at at least one rotational position of the rotor,
   b) ascertaining a deflection and/or a position error of the rotary apparatus, which is caused by the at least one torque and/or the at least one force, at the at least one rotational position,
   c) ascertaining a relationship between (i) torque and/or force and (ii) deflection and/or position error.

9. Method according to any one of the preceding claims, comprising

   - ascertaining a phase angle of the center of gravity of the mass in a coordinate system of a stator of the rotary apparatus and/or in a coordinate system of the rotor from the deflection of the rotor or the position error of the rotor.

10. Method according to Claim 9, comprising

   - ascertaining a deflection of the rotor (2; 51) in a first spatial direction and a deflection of the rotor (2; 51) in a second spatial direction, at a rotational position of the rotor (2; 51),
   - ascertaining the phase angle of the center of gravity of the mass (m) from the deflection in the first spatial direction and the deflection in the second spatial direction.

11. Method for ascertaining the phase angle of the center of gravity of a mass on a rotor of a rotary apparatus in a coordinate system of a stator of the rotary apparatus and/or in a coordinate system of the rotor (2; 51), wherein the rotary apparatus comprises a measuring system (3, 4a, 4b, 4c, 4d; 95, 64a, 94a, 94b; 110, $LK_1$, $LK_2$, $LK_n$), the latter comprising:

   - a measuring body (3; 95; 110),
   - at least three detection devices (4a, 4b, 4c, 4d; 64a, 94a, 94b; $LK_1$, $LK_2$, $LK_n$) for detecting a relative position of the detection devices (4a, 4b, 4c, 4d; 64a, 94a, 94b; $LK_1$, $LK_2$, $LK_n$) in relation to the measuring body (3; 95; 110) and/or for detecting a change in the relative position of the detection devices in relation to the measuring body,

   and wherein the method comprises the following steps:

   - positioning (S 1.0) a mass (m) on a rotor (2; 51) of the rotary apparatus,
   - ascertaining (S 1.1) a deflection of the rotor (2; 51) at a set rotational position of the rotor (2; 51), from the relative position of the at least three detection devices (4a, 4b, 4c, 4d; 64a, 94a, 94b; $LK_1$, $LK_2$, $LK_n$) in relation to the measuring body (3; 95),
   - ascertaining (S 1.2) the phase angle of the center of gravity of the mass (m) in the one set rotational position from the deflection of the rotor (2; 51).

12. Method according to claim 11, comprising:

   - ascertaining a deflection of the rotor (2) in a first spatial direction and a deflection of the rotor (2) in a second spatial direction, at a rotational position of the rotor (2),
   - ascertaining the phase angle of the center of gravity of the mass (m) from the deflection in the first spatial direction and the deflection in the second spatial direction.


**Revendications**

1. Procédé de détermination d'un couple et/ou d'une force qui agissent sur un ensemble de rotation (1; 50) d'un appareil de mesure de coordonnées transversalement par rapport à un axe de rotation (D) d'un moteur (2; 51) de l'ensemble de rotation, l'ensemble de rotation présentant un système de mesure (3, 4a, 4b, 4c, 4d; 95, 64a, 94a, 94b; 110, $LK_1$, $LK_2$, $LK_n$) qui présente :

   un corps de mesure (3; 95; 110),
   au moins trois dispositifs de détection (4a, 4b, 4c, 4d; 95, 64a, 94a, 94b; 110, $LK_1$, $LK_2$, $LK_n$) qui détectent la position relative des dispositifs de détection (4a, 4b, 4c, 4d; 95, 64a, 94a, 94b; 110, $LK_1$, $LK_2$, $LK_n$) par rapport

au corps de mesure (3; 95; 110) et/ou qui détectent une modification de la position relative des dispositifs de détection par rapport à un corps de mesure,

le procédé présentant les étapes suivantes :

formation (S1) d'un couple (M) et/ou d'une force qui agissent sur un ensemble de rotation (1; 50) d'un appareil de mesure de coordonnées transversalement par rapport à un axe de rotation (D) d'un moteur (2; 51) de l'ensemble de rotation (1; 50), dans une position de rotation qui s'est établie, le couple et/ou la force ayant pour effet une déviation du rotor,

détermination (S2) de la déviation du rotor (2; 51) et/ou d'une erreur de position du rotor dans la position de rotation que le rotor a prise, à partir de la position relative des trois ou plusieurs dispositifs de détection (4a, 4b, 4c, 4d; 95; 64a, 94a, 94b; 110, $LK_1$, $LK_2$, $LK_n$) par rapport au corps de mesure (3; 95; 110),

détermination (S3) d'une valeur du couple et/ou de la force pour la position de rotation que le rotor (2; 51) à prise en recourant à une relation connue ou déterminée pour l'ensemble de rotation, qui est une association ou une relation fonctionnelle, entre :

i) le moment (M) et/ou la force et
ii) la déviation et/ou l'erreur de position.

2. Procédé selon la revendication 1, qui prévoit quatre dispositifs de détection (4a, 4b, 4c, 4d).

3. Procédé selon la revendication 2, dans lequel les dispositifs de détection (4a, 4b, 4c, 4d) répartis autour de l'axe de rotation (D) avec un décalage mutuel de 80 à 110°.

4. Procédé selon l'une des revendications précédentes, dans lequel le couple (M) est formé par :

le placement d'une masse (m), en particulier d'une pièce (W) sur le rotor (2), le centre de gravité de la masse étant décentré par rapport à l'axe de rotation (D) et/ou
l'application sur le rotor (2) d'une force, en mettant le rotor (2) ou une pièce (W) placée sur le rotor en contact avec un système de mesure d'un appareil de mesure de coordonnées.

5. Procédé selon l'une des revendications précédentes, dans lequel le procédé détermine le placement de la masse (m) par lequel le couple et/ou la force sont minimums ou nuls, le placement de la masse (m) sur le rotor (2) s'effectuant dans le procédé de telle sorte que la déviation ou l'erreur de positionnement qui a été déterminée sont minimales ou nulles.

6. Procédé selon l'une des revendications précédentes, présentant l'émission d'un avertissement et/ou d'un blocage d'un déplacement de rotation du rotor (2) si une valeur limite prédéterminée du couple (M) ou de la force est atteinte ou dépassée.

7. Procédé selon l'une des revendications précédentes, dans lequel l'ensemble de rotation (1; 50) est disposé dans un appareil de mesure de coordonnées.

8. Procédé selon l'une des revendications précédentes, dans lequel la relation est obtenue par :

a) formation d'au moins un couple et/ou d'au moins une force transversalement par rapport à l'axe de rotation du rotor de l'ensemble de rotation dans au moins une position de rotation du rotor,
b) détermination d'une déviation et/ou d'une erreur de position de l'ensemble de rotation qui sont provoquées par le ou les couples et/ou la ou les forces dans la ou les positions de rotation,
c) détermination d'une relation entre (i) le couple et/ou la force et (ii) la déviation et/ou l'erreur de position.

9. Procédé selon l'une des revendications précédentes, présentant :
la détermination d'un angle de déphasage entre le centre de gravité de la masse dans un système de coordonnées d'un stator de l'ensemble de rotation et/ou dans un système de coordonnées du rotor à partir de la déviation du rotor ou de l'erreur de position du rotor.

10. Procédé selon la revendication 9, présentant :

la détermination d'une déviation du rotor (2; 51) dans une première direction de l'espace et d'une déviation du rotor (2; 51) dans une deuxième direction de l'espace pour une position en rotation du rotor (2; 51) et la détermination de l'angle de déphasage du centre de gravité de la masse (m) à partir de la déviation dans la première direction de l'espace et de la déviation dans la deuxième direction de l'espace.

11. Procédé de détermination de l'angle de déphasage du centre de gravité d'une masse placée sur un rotor d'un ensemble de rotation dans un système de coordonnées d'un stator de l'ensemble de rotation et/ou dans un système de coordonnées du rotor (2; 51), l'ensemble de rotation présentant un système de mesure (3, 4a, 4b, 4c, 4d; 95, 64a, 94a, 94b; 110, $LK_1$, $LK_2$, $LK_n$) qui présente :

un corps de mesure (3; 95; 110),
au moins trois dispositifs de détection (4a, 4b, 4c, 4d; 95, 64a, 94a, 94b; 110, $LK_1$, $LK_2$, $LK_n$) qui détectent la position relative des dispositifs de détection (4a, 4b, 4c, 4d; 95, 64a, 94a, 94b; 110, $LK_1$, $LK_2$, $LK_n$) par rapport au corps de mesure (3; 95; 110) et/ou qui détectent une modification de la position relative des dispositifs de détection par rapport à un corps de mesure,

le procédé présentant les étapes suivantes :

placement (S1.0) d'une masse (m) sur le rotor (2; 51) de l'ensemble de rotation,
détermination (S1.1) d'une déviation du rotor (2.51) dans la position de rotation que le rotor (2; 51) a prise à partir de la position relative des trois ou plusieurs dispositifs de détection (4a, 4b, 4c, 4d; 95, 64a, 94a, 94b; 110, $LK_1$, $LK_2$, $LK_n$) par rapport au corps de mesure (3; 95) et
détermination (S1.2) de l'angle de déphasage du centre de gravité de la masse (m) dans la position en rotation qui a été prise, à partir de la déviation du rotor (2; 51).

12. Procédé selon la revendication 11, présentant :

la détermination d'une déviation du rotor (2; 51) dans une première direction de l'espace et d'une déviation du rotor (2; 51) dans une deuxième direction de l'espace pour une position en rotation du rotor (2; 51) et la détermination de l'angle de déphasage du centre de gravité de la masse (m) à partir de la déviation dans la première direction de l'espace et de la déviation dans la deuxième direction de l'espace.

Fig.1

Fig.2

Fig.3

Fig.4

Fig.5

30

Fig.6

Fig. 7a

Fig.7b

Fig.8

S1

Erzeugen eines Moments und/oder einer Kraft

S2

Ermitteln einer Auslenkung des Rotors und/oder eines
Positionsfehlers des Rotors

S3

Ermitteln des Moments und/oder der Kraft

Fig. 9

**S1.0**

Positionieren einer Masse
auf einem Rotor der
Drehvorrichtung

**S1.1**

Ermitteln einer Auslenkung des Rotors bei einer
Drehposition des Rotors

**S1.2**

Ermitteln des Phasenwinkels des Schwerpunkts der
Masse

Fig. 10

Fig.11

**IN DER BESCHREIBUNG AUFGEFÜHRTE DOKUMENTE**

**In der Beschreibung aufgeführte Patentdokumente**

- WO 2013007285 A
- EP 2013050328 W
- WO 2013007285 A1
- DE 102008058198 A1